# EUROPÄISCHE PATENTANMELDUNG

(11) **EP 4 462 660 A1**
(43) Veröffentlichungstag der Anmeldung: **13.11.2024**
(21) Anmeldenummer: 24174922.5
(22) Anmeldetag: 08.05.2024
(51) Int. Cl.: H02M 1/12, H02M 1/42, H02M 3/00, H02M 3/155

(54) **PFC-NETZSCHALTUNG**

(30) Priorität: 08.05.2023 LU 504159
(71) Anmelder: ACD Antriebstechnik GmbH, 88480 Achstetten (DE)
(72) Erfinder: Fesseler, Aaron, 88480 Achstetten (DE)
(74) Vertreter: Sonnenberg Harrison Partnerschaft mbB

(57) **Zusammenfassung**

PFC-Netzschaltung mit Halbbrücke und ein Verfahren zur Wandlung einer Netzwechselspannung in sowohl eine niedrigere als auch eine höhere Ausgangsgleichspannung unter Einhaltung von PFC-Normen, wobei die PFC-Netzschaltung drei Phasen, einen Gleichrichter umfassend drei Eingänge, einen ersten und einen zweiten Transistor, welcher von einer Steuereinheit angesteuert wird, einen Mittelpunkt, welcher eingerichtet ist zwischen dem ersten und dem zweiten Transistor, einen Sternpunkt, umfassend drei Sternkondensatoren und einen Kondensator, verbunden mit dem Mittelpunkt und einem Bezugspotential, welches entweder das Nullpotential der Netzschaltung oder der Sternpunk der Sternkondensatoren sein kann, umfasst. Die Netzschaltung umfasst ferner einen Ausgangskondensator, eine Ausgangsspule, eine Diode und einen Strangkondensator, wobei der Ausgangskondensator die Ausgangsspule, die Diode und der Strangkondensator an einem Ausgangsbereich der Netzschaltung bereitgestellt sind. Der Kondensator ist ausgestaltet, um durch ein gezieltes Laden und Entladen über das Ansteuern des ersten und zweiten Transistors als einstellbare Spannungsquelle zu dienen und eine Spannungsdifferenz an den drei Speicherdrosseln einzustellen, um PFC-Normen zu erfüllen. Die Steuereinheit ist eingerichtet, um den ersten Transistor und den zweiten Transistor so anzusteuern, dass eine Netzwechselspannung in eine hochgesetzte oder tiefgesetzte Ausgangsgleichspannung in Abhängigkeit einer Polarität von Strangspannungen gewandelt wird. Das Ansteuern des ersten und zweiten Transistors erfolgt durch die Steuereinheit mittels positiver und negativer Ansteuerung.

## Beschreibung

Diese Anmeldung beansprucht die Priorität der luxemburgischen Patentanmeldung LU504159, eingereicht am 8. Mai 2023. Der Inhalt der gesamten luxemburgischen Patentanmeldung LU504159 ist hiermit durch Bezugnahme hierin vollständig aufgenommen.

Die vorliegende Erfindung betrifft eine Netzschaltung zur Versorgung elektrischer Verbraucher mit Gleichstrom aus einem dreiphasigen Versorgungsnetz und ein Verfahren zum Modulieren der Strangspannungen aus einem dreiphasigen Versorgungsnetz, bei welcher die gleichgerichtete Spannung sowohl hochgesetzt als auch tiefgesetzt werden kann. Die Netzschaltung stellt dabei belastungsunabhängig sicher, dass Phasenströme am Eingang eines Gleichrichters weitgehend sinusförmig sind. Es wird somit eine Netzschaltung bereitgestellt, welche es durch gezielte Ansteuerung von Steuerelementen eine Netzwechselspannung unter Einhaltung von PFC-Normen hoch- und tiefzusetzten.

Aus dem Stand der Technik sind Netzschaltungen bekannt. Netzschaltungen haben zur Aufgabe, eine am Eingang anliegende Netzwechselspannung gleichzurichten und auf einen Wert größer als die Amplitude der verketteten Netzwechselspannung hochzusetzen (Hochsetzsteller beziehungsweise Boost-Converter) beziehungsweise auf einen Wert kleiner als die Amplitude der verketteten Netzwechselspannung tiefzusetzen (Tiefsetzsteller beziehungsweise Buck-Converter).

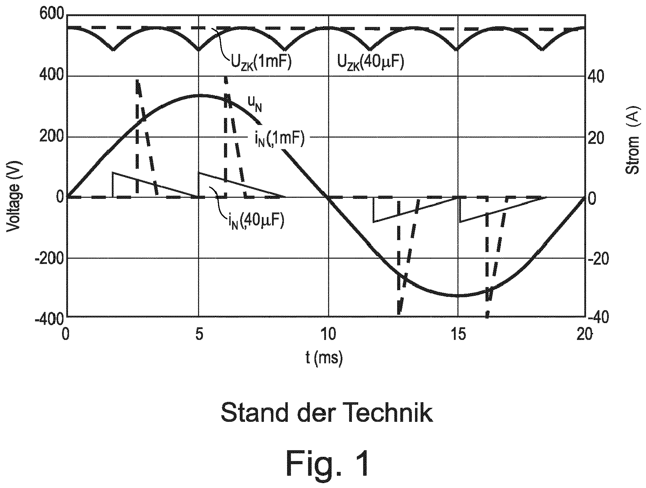

Dabei besteht bekanntermaßen zwischen der Netzwechselspannung und der Zwischenkreisspannung ein fester physikalischer Zusammenhang, wie in Fig. 1 dargestellt. Elektronische Wandlersysteme in Form von Hochsetzstellern und Tiefsetzstellern ermöglichen die Wandlung der Netzwechselspannung zu einer größeren oder kleineren Zwischenkreisspannung UZK beziehungsweise Ausgangsgleichspannung. Mit den bekannten elektronischen Wandlersystemen wird versucht, sinusähnliche Phasenströme zu erreichen. Diese werden dann als PFC-Hochsetzsteller oder PFC-Tiefsetzsteller bezeichnet mit PFC für Leistungsfaktor-Korrektur bzw. power-factor-correction (PFC).

Es ist bekannt, dass viele am öffentlichen Versorgungsnetz angeschlossene Verbraucher durch einfache Brückengleichrichter impulsförmige Netzströme beziehen, die mit großen Oberschwingungsströmen und dadurch mit hoher Blindleistungsaufnahme einhergehen. Diese impulsförmigen Ströme erfordern eine Überdimensionierung des öffentlichen Versorgungsnetzes. Zudem kommt es zu kurzzeitigen Spannungseinbrüchen und Spannungsspitzen, was zunehmend zu Problemen bei empfindlichen Verbrauchern führt. Deshalb gibt es entsprechende (PFC-)Normen (siehe beispielsweise DIN EN IEC 61000-3-2 (VDE 0838-2), Dezember 2019 und DIN EN 61000-3-12 (VDE 0838-12), Juni 2012), welche ab einer gewissen Leistung den Einsatz einer sogenannte Leistungsfaktor-Korrektur bzw. power-factor-correction (PFC) erfordern. Der Einsatz von aktiven Schaltungslösungen wird dadurch erforderlich, da die Bauelemente in passiven Systemen einen größeren Bauraum benötigen und Ströme mit einer von einem Sinus abweichenden Form liefern.

EP 3 068 024 A1 offenbart beispielsweise ein dreiphasiges Pulsgleichrichtersystem mit vergleichsweise geringer Sperrspannungsbeanspruchung der abschaltbaren Leistungshalbleiter und hoher Leistungsdichte, sowie geringen Netzrückwirkungen. Solch ein Dreiphasen-Dreipunkt-Pulsgleichrichter, auch als sogenannter Vienna-Gleichrichter bezeichnet, zeichnet sich bekanntlich im Gegensatz zu herkömmlichen, zur Gleichrichtung von Drehstrom verwendeten Sechspuls-Brückenschaltungen durch einen wesentlich geringeren Oberschwingungsanteil auf der Wechselspannungsseite aus.

US 2013 / 0 194 838 A1 offenbart einen dreiphasigen Aufwärtsgleichrichter mit niedrigem Eingangsstrom und Oberschwingungen, umfassend eine Eingangsstufe zum Empfang einer dreiphasigen Eingangsspannung in Bezug auf einen Neutralpunkt und eine Ausgangsstufe, die zur Kopplung mit mindestens einer Last geeignet ist.

US 5 933 336 A offenbart einen Hochsetzsteller umfassend einen ersten, zweiten und dritten Phaseneingang und einen Ausgang. Der Hochsetzsteller umfasst ferner einen ersten und einen zweiten Schalter beziehungsweise Transistor, die zwischen entsprechende Leitungen des Ausgangs geschaltet sind. Der Hochsetzsteller umfasst auch einen ersten, zweiten und dritten Kondensator, die mit einer ersten Induktivität einen ersten, zweiten bzw. dritten L-C-Serienzweig bilden. Die ersten, zweiten und dritten L-C-Serienzweige sind zwischen den ersten, zweiten bzw. dritten Phaseneingängen und einem Knoten zwischen dem ersten und zweiten Schalter gekoppelt. Der erste und der zweite Schalter arbeiten progressiv zusammen, um eine Spannung über den Leitungen abzüglich einer Spannung über dem ersten, zweiten und dritten Kondensator zu verwenden, um Ströme durch die erste Induktivität zu entladen und dadurch die gesamte harmonische Verzerrung (THD) des Eingangsstroms an allen drei Phaseneingängen zu reduzieren.

EP 0 973 245 A2 offenbart eine Schaltung, bei welcher Induktivitäten mit drei Phaseneingängen gekoppelt sind. Zwei Schalter sind zwischen den Anschlüssen des Ausgangs gekoppelt. Drei Kondensatoren sind sternförmig mit den drei Phaseneingängen verbunden, wobei der Sternpunkt mit dem Knoten zwischen den Schaltern verbunden ist. Ein Gleichrichter mit Dioden ist zwischen den Induktivitäten und den Schaltern eingefügt. Die Ausgabe ist über einen Ausgangskondensator an die Schalter gekoppelt. Die Phaseneingänge werden über ein elektromagnetisches Entstörfilter gespeist. Die Induktivitäten arbeiten im Lückbetrieb (Discontinuous Current Modem DCM). Ein Regelkreis steuert die Schalter. Die Schalter arbeiten progressiv zusammen, indem sie die Spannung über den Ausgängen, die geringer ist als die über den Kondensatoren, verwenden, um den Strom durch die Induktivitäten zu entladen und die Eingangsstrom-Gesamtverzerrung an allen Phaseneingängen zu reduzieren.

Aus WO 93/ 12 576 A1 ist eine Schaltung bekannt, um einen Strom zu erzeugen, der eine Oberschwingung der Frequenz eines Versorgungssystems ist und der eine ausgewählte Amplitude und Phase aufweist, um die gesamte harmonische Verzerrung eines Systems zu reduzieren, das Wechselstrom in Gleichstrom oder umgekehrt umwandelt. Das Gleichstromsignal wird abgetastet und durch die Steuerung von Schaltern wird ein sinusförmiger Strom mit der gewünschten Oberschwingung erzeugt und an einem Impedanznetzwerk bereitgestellt, das diesen Strom in das Mehrphasen-Wechselstromsystem des Stromversorgers einspeist. Das Impedanznetzwerk umfasst eine einzelne Induktivität und eine Kapazität, die durch jede der Phasen des Versorgungsunternehmens in Reihe geschaltet sind, wobei das Stromsignal eine Amplitude aufweist, die so gewählt ist, dass Oberwellen im Wesentlichen eliminiert werden, die eine hohe Verzerrung des Versorgungssignals verursachen.

CN 102 130 572 A offenbart ein dreiphasiges Gleichrichterbrücken-Gleichstromseiten-Parallelschaltungstyp-Wirkleistungsfilter. Das aktive Leistungsfilter umfasst ein Kopplungselement auf der Wechselstromseite einer Dreiphasen-Gleichrichterbrücke, welche ein bidirektionaler Niederfrequenz-Leistungsschalter ist, und wobei das Kopplungselement eine Impedanz ist. Das aktive Leistungsfilter verbessert den Stand der Technik, bei welchem zwei Kondensatoren und vier Hochfrequenz-Leistungsschaltröhren, verwendet in zwei bidirektionalen Leistungswandlern vom Boost-Typ, gegenseitig in Reihe geschaltet, dahingehend dass nur ein Kondensator und drei Hochfrequenz-Leistungsschaltröhren benötigt werden. Somit muss im Vergleich zum Stand der Technik das aktive Leistungsfilter die Spannung zwischen den beiden ursprünglichen Kondensatoren nicht ausgleichen und weist dadurch eine bessere Oberwellenunterdrückung auf.

Aus dem Stand der Technik sind somit Netzschaltungen bekannt, welche eine Netzwechselspannung in eine resultierende gleichgerichtete Zwischenkreisspannung wandeln können. Um jedoch die Netzwechselspannung sowohl hoch als auch tiefsetzen zu können, sind die bekannten Netzschaltungen meist als PFC-Hochsetzsteller eingerichtet und mit einer separat nachgeschalteten Tiefsetzsteller-Schaltung ausgestattet. Auch Wandlersysteme mit Übertrager finden hierzu Verwendung.

Solche Netzschaltungen benötigen für das Hochsetzstellen beziehungsweise Vergrößern der Netzwechselspannung, wie es beispielsweise beim Vienna-Gleichrichter der Fall ist, eine große Anzahl an Bauteilen, wodurch sie sehr teuer werden und zudem sehr komplexe Ansteuerungen benötigen. Um aus der zuvor hochgesetzten Spannung eine niedrigere Zwischenkreisspannung zu erhalten, muss zusätzlich zu dieser Schaltung eine Tiefsetzsteller-Schaltung nachgeschaltet werden, wofür wieder weitere Bauteile benötigt werden. Neben den steigenden Kosten verschlechtert sich auch der Wirkungsgrad gravierend durch die Hintereinanderschaltung zweier Wandlersysteme (durch Multiplikation der Wirkungsgrade der einzelnen Wandlersysteme). Die Verschlechterung des Wirkungsgrads kann für sämtliche PFC-Hochsetzsteller-Topologien verallgemeinert werden, bei denen eine Tiefsetzsteller-Schaltung nachgeschaltet werden muss.

Ein Beispiel einer PFC-Hochsetzsteller-Topologie ohne nachgeschalteter Wandlerschaltung ist beispielsweise aus WO 2021/260222 A1 bekannt. Diese offenbart, wie in Fig. 2 dargestellt, eine Netzschaltung N zur Bereitstellung einer Zwischenkreisgleichspannung UZK und eines lastabhängigen Zwischenkreisstromes IZK an einem Ausgang OUT aus einem dreiphasigen Versorgungsnetz VN. Die Netzschaltung N umfasst einen Kondensator CS in einem Mittelpunktnetzwerk, welcher als einstellbare Spannungsquelle zur Einstellung einer Spannungsdifferenz über Speicherdrosseln LL1, LL2, LL3 als Energiespeicher an einem Gleichrichter GR dient. Durch gezielte Ansteuerung von Steuerelementen ST kann die Netzwechselspannung unter Einhaltung von PFC-Normen hochgesetzt werden. Diese Netzschaltung hat jedoch zum Nachteil, dass nur ein Hochsetzen möglich ist.

Betrachtet man einen PFC-Tiefsetzsteller (Buck-Converter), so existieren hierzu auch verschiedene bekannte Tiefsetzsteller-Topologien mit nachgeschalteten Hochsetzsteller-Schaltungen. Durch die ebenfalls große Anzahl an Bauteilen kommt es auch zu einer merklichen Verschlechterung des Wirkungsgrads dieser Art von Schaltungen. Zudem wird ebenfalls eine komplexe Ansteuerung benötigt.

Als weitere Beispiele für nachgeschaltete Wandler bei PFC-Schaltungen, sind CUK- oder SEPIC-Wandler bekannt. Netzschaltungen, welche CUK- oder SEPIC-Wandler kombinieren, sind jedoch sehr komplex und benötigen zusätzliche Bauelemente, da CUK- oder SEPIC-Wandler aufgrund von Steuergesetzen nur bei konstanter Eingangsspannung funktionieren. Durch die große Anzahl an Bauteilen kommt es auch zu einer merklichen Verschlechterung des Wirkungsgrads dieser Art von Schaltungen.

Es ist daher die Aufgabe der vorliegenden Anmeldung eine Netzschaltung ohne nachgeschaltete Hochsetz- beziehungsweise Tiefsetzschaltung und ein Verfahren bereitzustellen, welche unter Einhaltung der PFC-Normen eine Netzwechselspannung und daraus resultierende gleichgerichtete Spannung in sowohl eine niedrigere als auch eine höhere Zwischenkreisspannung direkt wandelt und dabei die genannten Nachteile der bekannten Netzschaltungen überwindet.

### Kurzbeschreibung der Erfindung

Diese Aufgabe wird durch eine PFC-Netzschaltung mit Halbbrücke und einem Verfahren zur Wandlung einer Netzwechselspannung in sowohl eine niedrigere als auch eine höhere Ausgangsgleichspannung unter Einhaltung von PFC-Normen gelöst.

Die PFC-Netzschaltung umfasst drei Phasen, einen Gleichrichter, umfassend drei Eingänge, einen ersten und einen zweiten Transistor beziehungsweise Schalter, welche von einer Steuereinheit angesteuert werden, einen Mittelpunkt, welcher eingerichtet ist zwischen dem ersten und dem zweiten Transistor, einen Sternpunkt, umfassend drei Sternkondensatoren und einen Kondensator, verbunden mit dem Mittelpunkt und einem Bezugspotential, welches entweder das Nullpotential der Netzschaltung oder der Sternpunk der Sternkondensatoren sein kann, umfasst. Die Netzschaltung umfasst ferner einen Ausgangskondensator, eine Ausgangsspule, eine Diode und einen Strangkondensator, wobei der Ausgangskondensator die Ausgangsspule, die Diode und der Strangkondensator an einem Ausgangsbereich der Netzschaltung bereitgestellt sind. Die Netzschaltung umfasst ferner drei Speicherdrosseln, welche mit jeweils einer der drei Phasen und einem der drei Eingänge des Gleichrichters verbunden sind. Der Kondensator ist ausgestaltet, um durch ein gezieltes Laden und Entladen über das Ansteuern des ersten und zweiten Transistors als einstellbare Spannungsquelle zu dienen und eine Spannungsdifferenz an den drei Speicherdrosseln einzustellen, um PFC-Normen zu erfüllen. Die Steuereinheit ist eingerichtet, um den ersten Transistor und den zweiten Transistor so anzusteuern, dass eine Netzwechselspannung in eine hochgesetzte oder tiefgesetzte Ausgangsgleichspannung in Abhängigkeit einer Polarität von Strangspannungen gewandelt wird. Das Ansteuern des ersten und zweiten Transistors erfolgt durch die Steuereinheit mittels positiver und negativer Ansteuerung.

Hierdurch wird eine Netzschaltung bereitgestellt, welche es ermöglicht durch die Ansteuerung von lediglich dem ersten und dem zweiten Transistor eine Netzwechselspannung in eine niedrigere als auch eine höhere Ausgangsgleichspannung zu wandeln und dabei gezielt PFC-Normen einzuhalten beziehungsweise zu erfüllen. Durch die Ansteuerung wird ein sinusförmiger Strom aus dem Netz entzogen, um die PFC-Normen zu erfüllen. Die PFC-Normen werden somit gezielt erfüllt, indem die gleichen Transistoren, welche für das Hochsetzen und/oder Tiefsetzen durch die Ansteuerung angesteuert werden. Durch die Netzschaltung wird aufgrund unnötiger nachgeschalteter Topologien der Wirkungsgrad und Energieeffizienz erhöht, die Anzahl an Bauteilen reduziert und somit die Kosten gesenkt.

Nach einem Aspekt umfasst die Diode mindestens eine von einer Positivdiode im positiven Zweig, einer Negativdiode im negativen Zweig oder die Positivdiode im positiven Strang und die Negativdiode.

Durch die Diode kann der Ausgang der Netzschaltung elektrisch vollständig von der restlichen Netzschaltung entkoppelt werden. Ferner wird die Netzschaltung erdsymmetrisch und bietet weitere Vorteile hinsichtlich EMV (Elektromagnetische Verträglichkeit) und Ableitströmen. Dadurch verringert sich die elektrische Belastung der einzelnen Bauteile der Netzschaltung.

Nach einem weiteren Aspekt umfasst der Strangkondensator mindestens einen von einem Positivstrangkondensator im positiven Strang, einen Negativstrangkondensator im negativen Strang oder den Positivstrangkondensator im positiven Strang und den Negativstrangkondensator im negativen Strang.

Umfasst der Strangkondensator nur den Positivstrangkondensator oder den Negativstrangkondensator, kann ein Volumen des Bauraums verringert werden. Umfasst der Strangkondensator den Positivstrangkondensator und den Negativstrangkondensator, kann der Ausgang der Netzschaltung kapazitiv vollständig von der restlichen Netzschaltung entkoppelt werden. Ferner wird die Netzschaltung erdsymmetrisch und bietet weitere Vorteile hinsichtlich EMV (Elektromagnetische Verträglichkeit) und Ableitströmen. Dadurch verringert sich die elektrische Belastung der einzelnen Bauteile der Netzschaltung. Im Fall eines Ausfalls von Bauteilen der Netzschaltung kommt es am Ausgang zu keinem Durchschlagen der Eingangsspannung.

Nach einem weiteren Aspekt umfasst die Ausgangsspule mindestens eine von einer Positivausgangsspule im positiven Zweig, einer Negativausgangsspule im negativen Strang oder die Positivausgangsspule im positiven Strang und die Negativausgangsspule.

Umfasst die Ausgangsspule die Positivausgangsspule und die Negativausgangsspule, kann der Ausgang der Netzschaltung induktiv vollständig von der restlichen Netzschaltung entkoppelt werden. Ferner wird die Netzschaltung erdsymmetrisch und bietet weitere Vorteile hinsichtlich EMV (Elektromagnetische Verträglichkeit) und Ableitströmen. Dadurch verringert sich die elektrische Belastung der einzelnen Bauteile der Netzschaltung.

Nach einem weiteren Aspekt umfasst die Netzschaltung ferner eine Positiventkoppeldiode, bereitgestellt an dem Ausgangsbereich der Netzschaltung im positiven Zweig und eine Negativentkoppeldiode, bereitgestellt an dem Ausgangsbereich der Netzschaltung im negativen Zweig.

Durch die Positiventkoppeldiode und die Negativentkoppeldiode wird die induktive Entkoppelung des Ausgangs der Netzschaltung verbessert und es kann ein unidirektionaler Stromfluss zugelassen werden. Ferner wird die Netzschaltung erdsymmetrisch und bietet weitere Vorteile hinsichtlich EMV (Elektromagnetische Verträglichkeit) und Ableitströmen. Dadurch verringert sich die elektrische Belastung der einzelnen Bauteile der Netzschaltung.

Nach einem weiteren Aspekt ist die Netzschaltung mehrkanalig ausgeführt.

Durch die mehrkanalige Ausführung kann die Netzschaltung in größeren Leistungsbereichen eingesetzt werden.

Nach einem weiteren Aspekt werden die Kanäle der mehrkanalige Netzschaltung synchron oder nach dem Interleave-Prinzip versetzt betrieben.

Durch das Interleave-Prinzip kann die Energiezufuhr an die Bauteile der Netzschaltung aufgeteilt werden, um so die Belastung der Bauteile zu verringern. Des Weiteren kann die Welligkeit der Ausgangsspannung verringert werden, wodurch eine geringere Kapazität des Ausgangskondensators gewählt werden kann (Glättungskapazität).

Diese genannte Aufgabe wird ferner durch ein Verfahren zur Wandlung einer Netzwechselspannung in eine niedrigere oder höhere Ausgangsgleichspannung unter Einhaltung von PFC-Normen an einer Netzschaltung gelöst. Das Verfahren umfasst ein Ansteuern des ersten und des zweiten Transistors, ein Laden und Entladen des Kondensators in Abhängigkeit des Ansteuerns, ein Erzeugen einer Kondensatorspannung im Kondensator, ein Beeinflussen einer Spannungsdifferenz an drei Speicherdrosseln durch die Kondensatorspannung des Kondensators, und ein Entziehen von sinusförmigen Phasenströmen aus einem Versorgungsnetz, wobei Grenzwerte für Oberschwingungsströme der PFC-Norm eingehalten werden. Das Ansteuern umfasst ein positives und ein negatives Ansteuern und berücksichtigt eine Polarität von Strangspannungen. Durch das Laden und Entladen entsprechen Spulenspannungen der Speicherdrosseln einer Spannungsdifferenz zwischen Kondensatorspannung und Netzwechselspannung. Die Ausgangsgleichspannung ist/wird im Vergleich zur Netzwechselspannung in Abhängigkeit von dem Ansteuern hochgesetzt oder tiefgesetzt.

Durch das Ansteuern von lediglich dem ersten und dem zweiten Transistor der Netzschaltung, kann die Ausgangsgleichspannung unter Einhaltung der PFC-Normen hochgesetzt oder tiefgesetzt werden. Dies führt zu einer Erhöhung des Wirkungsgrads und der Energieeffizienz sowie zu einer Reduzierung der Anzahl an Bauteilen und somit der Kosten.

Nach einem Aspekt erfolgt das Ansteuern des ersten Transistors und zweiten Transistors derart, dass die Ausgangsgleichspannung lastabhängig auf einen gewünschten Wert geregelt wird, wobei als Freiheitsgrade mindestens eine von einer Einschaltdauer, einer Kurzschlussdauer und einer Ausschaltdauer des ersten und zweiten Transistors dient.

Nach einem weiteren Aspekt erfolgt das Ansteuern derart, dass Grenzwerte für Oberschwingungsströme der PFC-Normen eingehalten werden.

### Kurzbeschreibung der Zeichnungen

Die Erfindung wird nun anhand von Zeichnungen näher erläutert. Es zeigen:
Fig. 1 einen bekannten festen physikalischen Zusammenhang zwischen einer Netzwechselspannung und einer Zwischenkreisspannung.

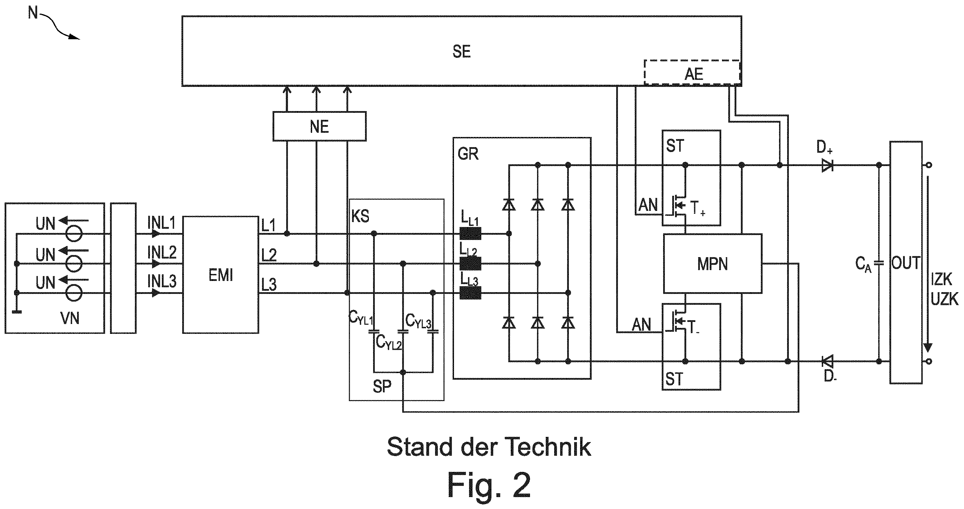

Fig. 2 eine bekannte PFC-Hochsetzsteller Topologie ohne nachgeschalteter Wandlerschaltung.
Fig. 3 eine Netzschaltung nach einem ersten Ausführungsbeispiel.
Fig. 4 einen Gleichrichter der Netzschaltung von Fig. 3.
Fig. 5 die Netzschaltung nach einem zweiten Ausführungsbeispiel.
Fig. 6 eine erste Modifikation eines Ausgangsbereichs der Netzschaltung.
Fig. 7A und 7B eine zweite Modifikation eines Ausgangsbereichs der Netzschaltung.
Fig. 8 eine dritte Modifikation eines Ausgangsbereichs der Netzschaltung.
Fig. 9 eine vierte Modifikation eines Ausgangsbereichs der Netzschaltung.
Fig. 10 und 11 einen mehrkanaligen Aufbau der Netzschaltung.
Fig. 12 einen Verlauf von Steuersignalen bei positiver Ansteuerung.
Fig. 13 einen Verlauf von Steuersignalen bei negativer Ansteuerung.
Fig. 14 unterschiedliche Kennlinien bei positiver Ansteuerung im Hochsetzbetrieb der Netzschaltung von Fig. 3.
Fig. 15 unterschiedliche Kennlinien bei negativer Ansteuerung im Hochsetzbetrieb der Netzschaltung von Fig. 3.
Fig. 16 unterschiedliche Kennlinien bei positiver Ansteuerung im Tiefsetzbetrieb der Netzschaltung von Fig. 3.
Fig. 17 unterschiedliche Kennlinien bei negativer Ansteuerung im Tiefsetzbetrieb der Netzschaltung von Fig. 3.
Fig. 18 unterschiedliche Kennlinien bei positiver Ansteuerung im Hochsetzbetrieb der Netzschaltung von Fig. 5.
Fig. 19 unterschiedliche Kennlinien bei negativer Ansteuerung im Hochsetzbetrieb der Netzschaltung von Fig. 5.
Fig. 20 unterschiedliche Kennlinien bei positiver Ansteuerung im Tiefsetzbetrieb der Netzschaltung von Fig. 5.
Fig. 21 unterschiedliche Kennlinien bei negativer Ansteuerung im Tiefsetzbetrieb der Netzschaltung von Fig. 5.
Fig. 22A und 22B Verfahrensschritte beim positiven und negativen Ansteuern der Netzschaltung.
Fig. 24A bis 25C einen Verlauf von Netzgrößen im Hochsetzbetrieb und Tiefsetzbetrieb der Netzschaltung von Fig. 3.
Fig. 26A bis 27C einen Verlauf von Netzgrößen im Hochsetzbetrieb und Tiefsetzbetrieb der Netzschaltung von Fig. 5.

### Detaillierte Beschreibung der Erfindung

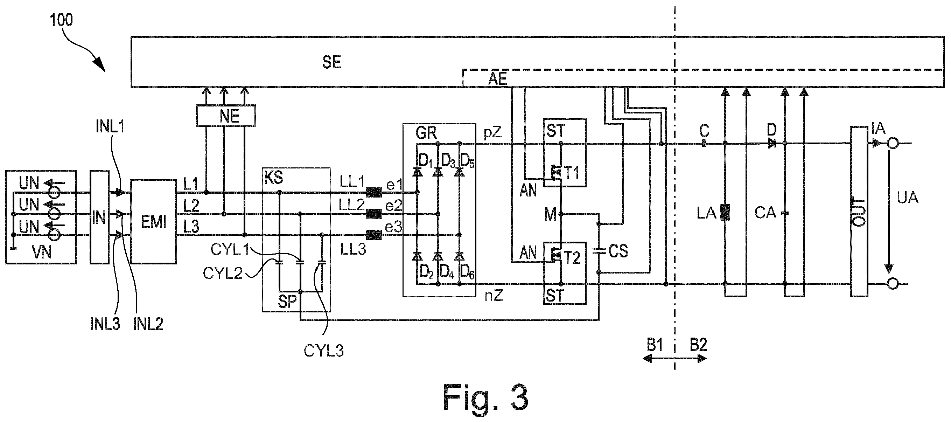

Fig. 3 stellt einen allgemeinen Aufbau einer einkanaligen Netzschaltung 100 gemäß einem ersten Ausführungsbeispiel zur Bereitstellung einer hochgesetzten oder tiefgesetzten Ausgangsgleichspannung UA an einem Ausgang der Netzschaltung 100 aus einer Netzwechselspannung uN (u1, u2, u3) aus einem dreiphasigen Versorgungsnetz VN dar.

Die Netzschaltung 100 umfasst mehrere Bauteile, welche miteinander verbunden sind. Die Netzschaltung 100 umfasst in einem Eingangsbereich B1 einen Eingang IN, ein EMI-Filter bzw. Filter für elektromagnetische Interferenzen, eine Netzerfassung NE, eine Steuereinheit SE optional umfassend eine Ausgangserfassung AE, eine Koppelschaltung KS, einen Gleichrichter GR, mindestens ein Steuerelement ST beziehungsweise einen ersten Transistor T1 und einen zweiten Transistor T2, einen Mittelpunkt M, eingerichtet zwischen dem ersten Transistor T1 und dem zweiten Transistor T2, einen Kondensator CS, und in einem Ausgangsbereich B2 einen Ausgangskondensator CA eine Ausgangsspule LA, eine Diode D, einen Strangkondensator C, und einen Ausgang OUT.

Der erste Transistor T1 und der zweite Transistor T2 sind Transistoren, umfassend jeweils Steuereingänge AN und jeweils eine Body-Diode (nicht dargestellt) oder eine parallel zum den Transistoren T1, T2 geschaltete Freilaufdiode (nicht dargestellt). Die Steuereingänge AN sind mit der Steuereinheit SE verbunden, sodass der erste Transistor T1 und der zweite Transistor T2 jeweils über die Steuereingänge AN über die Steuereinheit SE angesteuert werden. Der Kondensator CS ist mit dem Mittelpunkt M und einem Nullpotential NP der Netzschaltung 100 verbunden. Der erste Transistor T1, der Mittelpunkt M und der zweite Transistor T2 bilden eine Halbbrücke beziehungsweise eine elektronische Halbbrücken-Schaltung.

Am Eingang IN wird die Netzschaltung 100 über Phasen L1, L2, L3 mit dem Versorgungsnetz VN verbunden. Die Phasen L1, L2, L3 umfassen Netzgrößen NG. Die Netzgrößen NG umfassen mindestens eines von einer Phasenlage PL, Strangspannung UN (Strangspannungen u1, u2, u3) und Phasenströmen iNL1, iNL2, iNL3.

Nach dem Eingang IN folgt das EMI-Filter EMI, mit welchem elektromagnetische Interferenzen in bekannter Weise gefiltert werden. Aus diesem Grund und der Kürze halber wird das EMI-Filter hierin nicht näher beschrieben.

Die jeweiligen Netzgrößen NG der Phasen L1, L2, L3 werden durch die Netzerfassung NE in verschiedenen Schaltungszweigen erfasst und an die Steuereinheit SE weitergegeben. Die Netzerfassung NE ist zwischen dem EMI-Filter und der Koppelschaltung KS eingerichtet. Die Schaltungszweige umfassen dabei einen positiven Zweig pZ und einen negativen Zweig nZ.

Wenn das Versorgungsnetz VN ein Vier-Leiter-Dreiphasen-System mit Neutralleiter ist, entsteht am Versorgungsnetz VN ein symmetrischer Nullpunkt (nicht dargestellt).

Die Steuereinheit SE kann optional mit der Ausgangserfassung AE erweitert sein/werden, um Spannungsgrößen und Stromgrößen an unterschiedlichen Positionen insbesondere am Ausgang OUT der Netzschaltung 100 zu erfassen. Die Ausgangserfassung erfasst somit mindestens eines von einer Ausgangsgleichspannung UA und einem Ausgangsstrom IA am Ausgang OUT.

Nach der Koppelschaltung KS folgt der Gleichrichter GR, welcher im gezeigten Ausführungsbeispiel drei Eingänge e1, e2, e3 umfasst und mit Gleichrichterdioden D1, D2, D3, D4, D5, D6 als Energiespeicher aufgebaut ist. Die Eingänge e1, e2 und e3 verbinden den Gleichrichter GR mit den Phasen L1, L2, L3. Zwischen Koppelschaltung KS und dem Gleichrichter GR sind Speicherdrosseln LL1, LL2, LL3 bereitgestellt. Der Gleichrichter GR ist jedoch nicht auf dieses dargestellte Ausführungsbeispiel beschränkt. Der Gleichrichter GR kann auch mit steuerbaren Bauteilen, nicht-steuerbaren Bauteilen und/oder einer Kombination daraus ausgeführt sein/werden. Der Gleichrichter GR kann somit ein Gleich- und Wechselrichter sein, welcher eine Rückspeisemöglichkeit in das Versorgungsnetz VN ermöglicht.

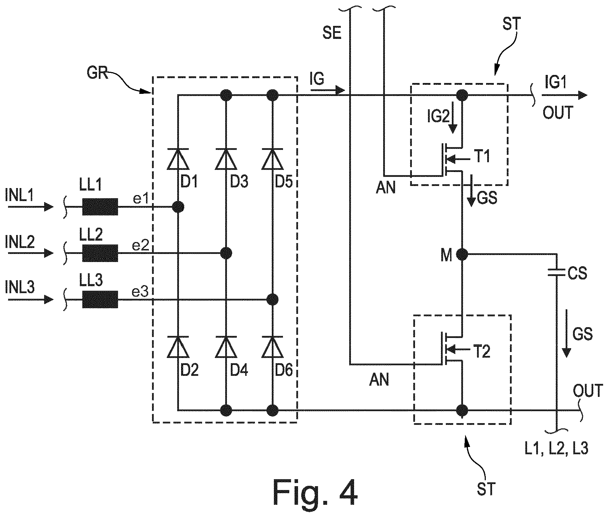

Wie in Fig. 4 dargestellt, richtet der Gleichrichter GR die Phasenströme iNL1, iNL2, iNL3 in den Phasen L1, L2, L3 gleich, wodurch ein gleichgerichteter Strom IG erzeugt wird. Der gleichgerichtete Strom IG verteilt sich, abhängig nach einem Taktzustand des ersten Transistors T1 in einen ersten gleichgerichteten Strom IG1 und einen zweiten gleichgerichteten Strom IG2. Der zweite gleichgerichtete Strom IG2 wird durch den ersten Transistor T1 durchgeleitet. Der erste gleichgerichtete Strom IG1 versorgt über den positiven Zweig pZ den Ausgang OUT der Netzschaltung 100.

Bei der Netzschaltung 100 werden die Steuereingänge AN des ersten Transistors T1 und des zweiten Transistors T2 durch die Steuereinheit SE angesteuert. Durch die Ansteuerung der Steuereingänge AN durch die Steuereinheit SE wird der zweite gleichgerichtete Strom IG2 in ein getaktetes Signal GS gewandelt. Das getaktete Signal GS entspricht dabei einem Kondensatorstrom iCS über den Kondensator CS.

Das getaktete Signal GS wird von dem ersten Transistor T1 über den Mittelpunkt M und den Kondensator CS an die Phasen L1, L2, L3 weitergeleitet, wie aus Fig. 3 zu entnehmen ist. Der Kondensator CS wird durch das getaktete Signal GS gezielt geladen. Die Spannung, auf die der Kondensator CS geladen wird, entspricht dem aufintegrierten Kondensatorstrom iCS dividiert durch einen Kapazitätswert des Kondensators CS.

Die Differenz aus den jeweiligen Strangspannungen und dem Spannungswert an der Kapazität bestimmt die Ströme durch die Speicherdrosseln LL1, LL2, LL3 und sorgt so für sinusförmig modulierte Phasenströme iNL1, iNL2, iNL3.

Der Kondensator CS dient somit als eine Spannungsquelle und stellt eine über die Ansteuerung des ersten Transistors T1 beziehungsweise zweiten Transistors T2 einstellbare Spannungsdifferenz über den/die Speicherdrosseln LL1, LL2, LL3 bereit. Hierdurch wird mit der Netzschaltung 100 ein sinusförmiger Stromentzug aus dem Versorgungsnetz VN zum Erfüllen der PFC-Normen garantiert.

Die Koppelschaltung KS ist zwischen dem EMI-Filter beziehungsweise der Netzerfassung NE und dem Gleichrichter GR bereitgestellt und mit dem Mittelpunkt M verbunden. Die Koppelschaltung KS filtert die durch die Taktung der Transistoren erzeugten hochfrequenten Stromanteile aus den Phasenströmen aus. Mit anderen Worten, die Koppelschaltung KS stellt sicher, dass sich durch die Taktung des ersten Transistors T1 und/oder des zweiten Transistors T2 hervorgerufene höherfrequente Ströme nicht in den Phasenströmen iNL1, iNL2, iNL3 sichtbar machen.

Die Koppelschaltung KS ist eine Kondensator-Sternschaltung, umfassend drei Sternkondensatoren CYL1, CYL2, CYL3 bildend einen Sternpunkt SP. Der Mittelpunkt M ist über den Kondensator CS mit dem Sternpunkt SP der Kondensator-Sternschaltung verbunden. Das Modulieren der Phasenströme iNL1, iNL2, iNL3 erfolgt an den Phasen L1, L2, L3 mit dem weitergeleiteten getakteten Signal GS über die Kondensator-Sternschaltung KS. Das weitergeleitete getaktete Signal GS wird demnach an den Sternpunkt SP der Koppelschaltung KS rückgeführt.

Um den Ausgang OUT kapazitiv vom Eingang IN zu trennen, ist im ersten Ausführungsbeispiel der Netzschaltung 100 im positiven Zweig pZ nach dem ersten Transistor T1 ein Strangkondensator C bereitgestellt. Nach dem Strangkondensator C in Richtung des Ausgangs OUT ist die Ausgangsspule LA zwischen dem positiven Zweig pZ und dem negativen Zweig nZ bereitgestellt. Die Ausgangsspule LA erfüllt die Funktion als ausgangsseitige Speicherdrossel (Energiespeicher), welcher für die Funktion der Schaltung (Hoch- und Tiefsetzung) erforderlich ist. Um den Ausgangsbereich B2 von der Netzschaltung 100 zu entkoppeln, sodass die Ausgangsgleichspannung UA taktunabhängig auf einem erdsymmetrischen Potential verbleibt, ist im ersten Ausführungsbeispiel der Netzschaltung 100 eine Diode im positiven Zweig pZ nach dem Strangkondensator C und der Ausgangsspule LA bereitgestellt. Der Ausgangskondensator CA ist zuletzt am Ausgang OUT zwischen dem positiven Zweig pZ und dem negativen Zweig nZ bereitgestellt. Durch diese spezifische Anordnung der genannten Bauteile im Ausgangbereich B2 entspricht die Netzschaltung 100 nach dem ersten Ausführungsbeispiel einer nicht-invertierenden Dreiphasen-Buck-Boost-Converter-Topologie.

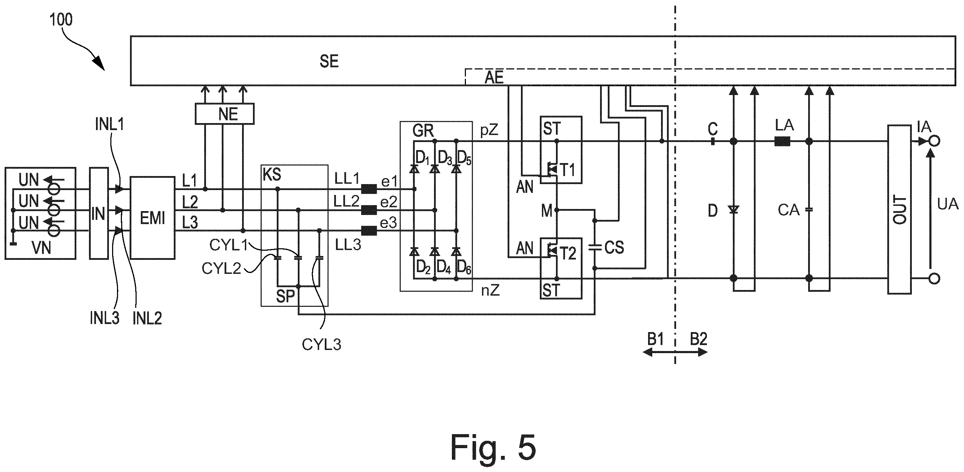

Fig. 5 stellt einen allgemeinen Aufbau der einkanaligen Netzschaltung 100 gemäß einem zweiten Ausführungsbeispiel zur Bereitstellung einer hochgesetzten oder tiefgesetzten Ausgangsgleichspannung UA an dem Ausgang OUT der Netzschaltung 100 aus einer Netzwechselspannung uN aus einem dreiphasigen Versorgungsnetz VN dar.

Die Netzschaltung 100 nach dem zweiten Ausführungsbeispiel unterscheidet sich von dem ersten Ausführungsbeispiel dadurch, dass die Ausgangsspule LA und die Diode D im Ausgangsbereich B2 unterschiedlich angeordnet sind. Die Bauteile im Eingangsbereich B1 sind die gleichen wie im ersten Ausführungsbeispiel und sind gleich angeordnet. Daher werden der Kürze halber, diese Bauteile nicht noch einmal im Detail beschrieben.

Bei der Netzschaltung 100 nach dem zweiten Ausführungsbeispiel ist im Ausgangsbereich B2 nach dem Strangkondensator C im positiven Zweig pZ in Richtung des Ausgangs OUT die Diode D zwischen dem positiven Zweig pZ und dem negativen Zweig nZ bereitgestellt. Ferner ist die Ausgangsspule LA im positiven Zweig pZ nach dem Strangkondensator C und der Diode bereitgestellt.

Durch die unterschiedliche Anordnung der Ausgangsspule LA und der Diode D im Ausgangsbereich B2 der Netzschaltung 100 nach dem zweiten Ausführungsbeispiel sind die Ausgangsgleichspannung UA und der Ausgangsstrom IA im Vergleich zum ersten Ausführungsbeispiel der Netzschaltung 100 entsprechend invertiert. Die Netzschaltung 100 nach dem zweiten Ausführungsbeispiel entspricht daher einer invertierenden Dreiphasen-Buck-Boost-Converter-Topologie.

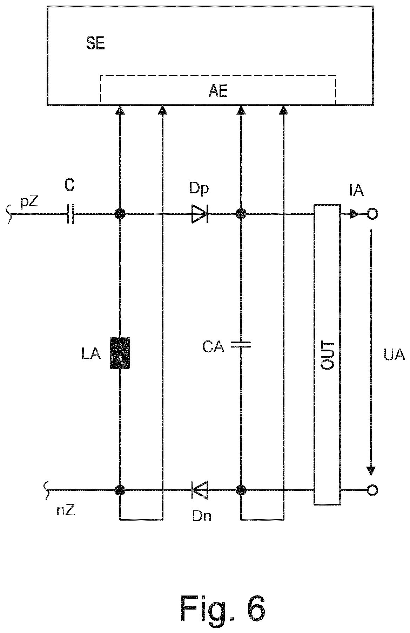

Fig. 6 zeigt den Ausgangsbereich B2 der Netzschaltung 100 nach dem ersten Ausgangsbeispiel entsprechend einer ersten Modifikation. Entsprechend der ersten Modifikation, umfasst die Diode D mindestens eine von einer Positivdiode Dp im positiven Zweig pZ und einer Negativdiode Dn im negativen Zweig nZ. Dabei kann die Diode D nur die Positivdiode Dp im positiven Zweig pZ oder die Negativdiode Dn im negativem Zweig nZ oder beide von der Positivdiode Dp und der Negativdiode Dn umfassen.

Durch die Verwendung von zwei Dioden, also der Positivdiode Dp im positiven Zweig pZ und der Negativdiode Dn im negativen Zweig nZ, kann der Ausgangsbereich B2 der Netzschaltung 100 entkoppelt werden, sodass die Ausgangsgleichspannung U_{A} taktunabhängig auf einem erdsymmetrischen Potential verbleibt. Für eine Verbesserung des Wirkungsgrads kann auch auf eine aktive Diode in Form eines Transistors zurückgegriffen werden. Die Netzschaltung 100 entsprechend der ersten Modifikation kann somit nur mit der Positivdiode Dp im positiven Zweig pZ, nur mit der Negativdiode Dn im negativem Zweig nZ oder mit beiden Dioden, der Positivdiode Dp und der Negativdiode Dn, realisiert sein.

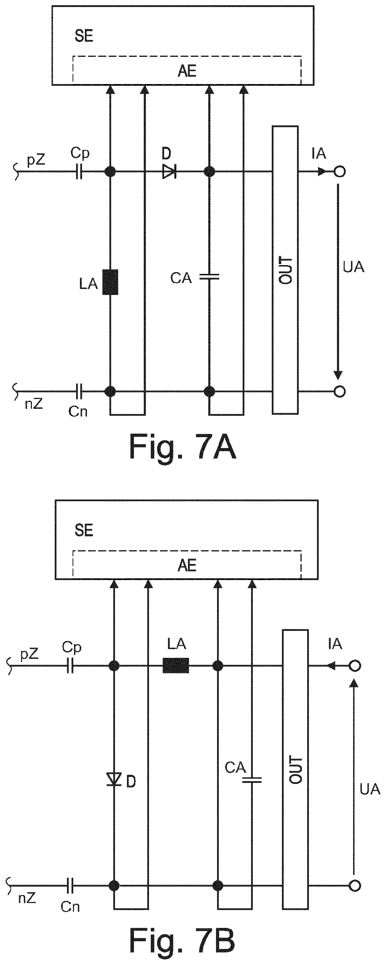

Fig. 7A und 7B zeigen den Ausgangsbereich B2 der Netzschaltung 100 nach dem ersten Ausgangsbeispiel (Fig. 7A) und den Ausgangsbereich B2 der Netzschaltung 100 nach dem zweiten Ausführungsbeispiel (Fig. 7B) entsprechend einer zweiten Modifikation. Entsprechend der zweiten Modifikation, umfasst der Strangkondensator C mindestens einen von einem Positivstrangkondensator Cp im positiven Zweig pZ und einem Negativstrangkondensator Cn im negativen Zweig nZ. Dabei kann der Strangkondensator C nur den Positivstrangkondensator Cp im positiven Zweig pZ oder den Negativstrangkondensator Cn im negativen Zweig nZ oder beide von dem Positivstrangkondensator Cp und dem Negativstrangkondensator Cn umfassen.

Die Aufteilung des Strangkondensator C bietet einerseits den Vorteil, dass der Ausgang OUT kapazitiv vom Eingang IN der der Netzschaltung 100 abgekoppelt beziehungsweise getrennt wird. Während des Betriebs treten hohe Spannungen am Strangkondensator C auf. Durch das Aufteilen des Strangkondensators C in den Positivstrangkondensator Cp und den Negativstrangkondensator Cn, können Kondensatoren mit einer geringeren Spannungsfestigkeit verwendet werden, da sich die Spannung in diesem Fall halbiert. Es ist zu beachten, dass der Positivstrangkondensator Cp und der Negativstrangkondensator Cn dabei einer Reihenschaltung entsprechen. Um also mit dem Positivstrangkondensator Cp und dem Negativstrangkondensator Cn dieselbe Gesamtkapazität, wie mit dem einzelnen Strangkondensator C zu erhalten, müssen der Positivstrangkondensator Cp und der Negativstrangkondensator Cn im Vergleich zu dem Strangkondensator C doppelt so groß gewählt werden.

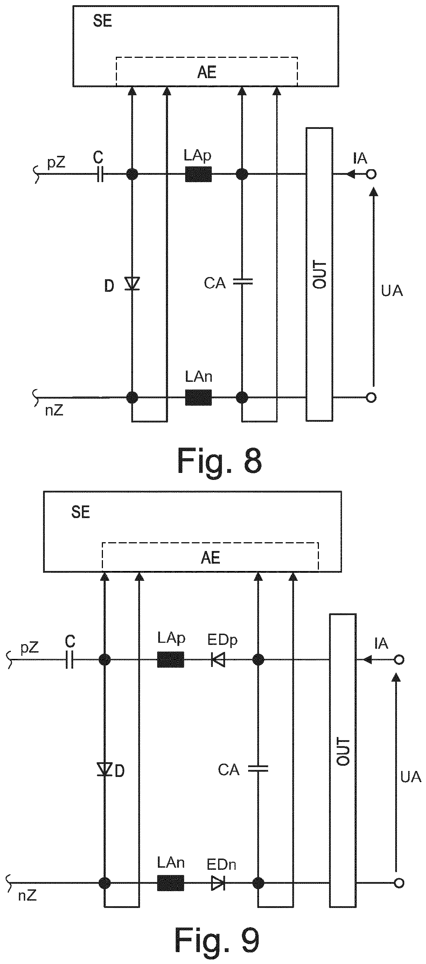

Fig. 8 zeigt den Ausgangsbereich B2 der Netzschaltung 100 nach dem zweiten Ausgangsbeispiel entsprechend einer dritten Modifikation. Entsprechend der dritten Modifikation, umfasst die Ausgangsspule LA mindestens eine von einer Positivausgangsspule LAp im positiven Zweig pZ und einer Negativausgangsspule LAn im negativen Zweig nZ. Dabei kann die Ausgangsspule LA nur die Positivausgangsspule LAp im positiven Zweig pZ oder die Negativausgangsspule LAn im negativem Zweig nZ oder beide von der Positivausgangsspule LAp und der Negativausgangsspule LAn umfassen.

Fig. 9 zeigt den Ausgangsbereich B2 der Netzschaltung 100 nach dem zweiten Ausgangsbeispiel entsprechend einer vierten Modifikation. Die vierte Modifikation kann als eine weitere Modifikation der dritten Modifikation entsprechend Fig. 8 angesehen werden. Entsprechend der vierten Modifikation wird der Ausgangsbereich B2 der Netzschaltung 100 nach Fig. 8 um eine Positiventkoppeldiode EDp und eine und eine Negativentkoppeldiode EDn erweitert. Die Positiventkoppeldiode EDp ist nach der Positivausgangsspule LAp zum Ausgang OUT im positiven Zweig pZ bereitgestellt. Die Negativentkoppeldiode EDn ist nach der Negativausgangsspule LAn zum Ausgang OUT im negativem Zweig nZ bereitgestellt.

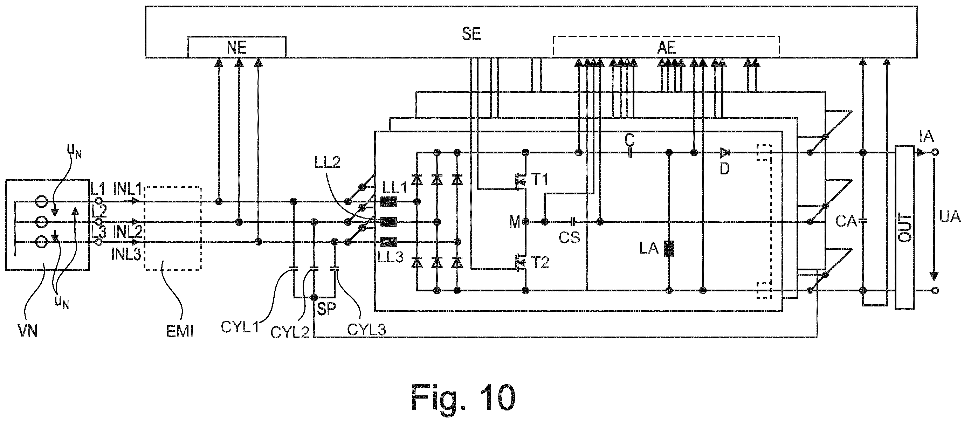

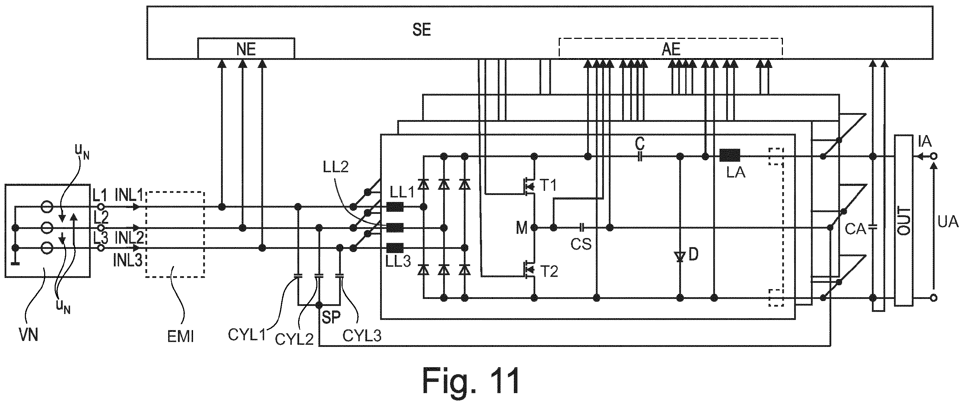

Fig. 10 und 11 zeigen einen mehrkanaligen Aufbau der Netzschaltung 100 gemäß dem ersten Ausführungsbeispiel (Fig. 10) und einen mehrkanaligen Aufbau der Netzschaltung 100 gemäß dem zweiten Ausführungsbeispiel (Fig. 11) zur Bereitstellung einer hochgesetzten oder tiefgesetzten Ausgangsgleichspannung UA für den Einsatz in größeren Leistungsbereichen.

Wie dargestellt, wird die Struktur der Netzschaltung 100 zwischen der Koppelschaltung KS und dem Ausgangskondensator CA mehrkanalig beziehungsweise vielfach parallelgeschaltet.

Der mehrkanalige Aufbau der Netzschaltungen 100 nach Fig. 10 und Fig. 11 kann entweder synchron, oder nach dem bekannten Interleave-Prinzip betrieben werden. Bei dem Interleave-Prinzip takten die einzelnen Strukturen jeweils versetzt zueinander. Beispielsweise wird bei zwei Strukturen beziehungsweise zweikanaliger Ausführung typischerweise mit einem Versatz um die halbe Periodendauer getaktet. Bei n Strukturen wird beispielsweise um n Verschiebung innerhalb einer Periodendauer getaktet. Die Taktung beziehungsweise Ansteuerung erfolgt über die Steuereinheit SE.

Der mit den drei Sternkondensatoren CYL1, CYI,2, CYL3 realisierte Sternpunkt SP dient als gemeinsamer Bezugspunkt für alle Kondensatoren CS der Vielzahl an Strukturen. Ein bei einem Vier-Leiter-Dreiphasen-System vorhandener Neutralleiter kann ebenso als Bezugspunkt verwendet werden. Alternativ könnte jede Struktur einen eigenständigen Mittelpunkt M beziehungsweise Sternpunkt SP für den Kondensator CS über Kondensatoren bereitstellen, das heißt für jede Struktur wären vor den Speicherdrosseln LL1, LL2, LL3 jeweils drei eigene Sternkondensatoren vorgesehen.

Durch eine spezielle Art der Ansteuerung des Steuereingangs AN des mindestens einen von dem ersten Transistor T1 und dem zweiten Transistor T2 durch die Steuereinheit SE wird der Kondensators CS des Mittelpunkts M gezielt geladen. Das Laden des Kondensators CS entspricht dabei mindestens einem von einem Vorladen, Aufladen, Umladen und Entladen. Die Art des Ladens des Kondensators CS hängt dabei von den erfassten Netzgrößen, erfasst durch die Netzerfassung NE und die Ausgangserfassung AE, ab.

Durch die Kondensatorspannung uCS am Kondensator CS werden die Spulenspannungen uLL1, uLL2, uLL3 derart moduliert, dass sinusförmige Phasenströme iNL1, iNL2, iNL3 aus den Phasen L1, L2, L3 des Versorgungsnetzes VN entzogen werden. Mit anderen Worten, die speziell an die Netzgrößen eingestellte Kondensatorspannung uCS am Kondensator CS dient zum dynamischen Ausgleich von Abweichungen der Spulenspannungen uLL1, uLL2, uLL3 an den Speicherdrosseln LL1, LL2, LL3 derart, dass sinusförmige Phasenströme iNL1, iNL2, iNL3 aus den Phasen L1, L2, L3 des Versorgungsnetzes VN entzogen werden, um die PFC-Normen einzuhalten. Der Ausgleich ist dabei dynamisch, da die Höhe der Kondensatorspannung uCS von der Ansteuerung des ersten und zweiten Transistors T1, T2 durch die Steuereinheit SE abhängt, wobei die Ansteuerung von den durch die Netzerfassung NE und die Ausgangserfassung AE erfassten Netzgrößen abhängt.

Die Höhe der Kondensatorspannung uCS hängt somit von einem Tastverhältnis beziehungsweise Duty-Cycle TV ab, wie weiter unten beschrieben. Durch die Modulation werden die Phasenströme iNL1, iNL2, iNL3 zu im Wesentlichen sinusförmigen Strömen beziehungsweise weisen im Wesentlichen sinusförmige Verläufe auf, welche in allen Leistungsbereichen den PFC-Normen entsprechen. Die Modulation entspricht dabei einer aus einer Pulsweitenmodulation, Pulsfrequenzmodulation oder anderer bekannter Modulationsverfahren. Die sinusförmigen Ströme werden am Eingang der Netzschaltung 100 aus dem Versorgungsnetz VN entzogen.

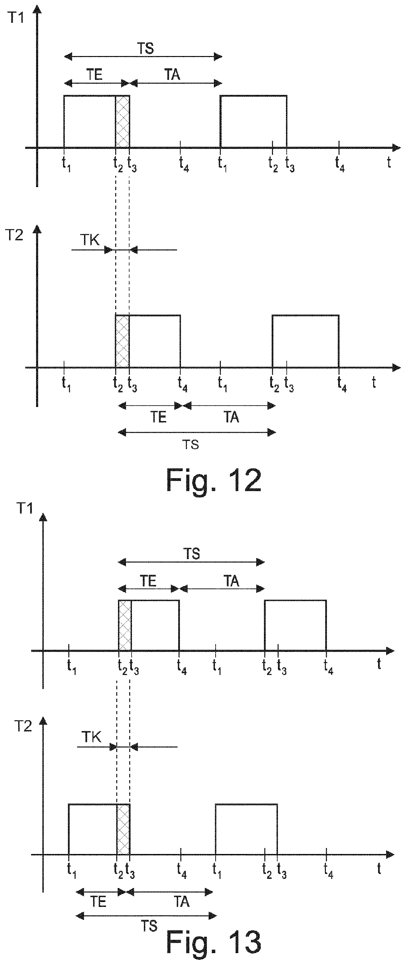

Durch das Laden des Kondensator CS in Abhängigkeit von der speziellen Art der Ansteuerung, dient der Kondensator CS als einstellbare Spannungsquelle zur Erzeugung einer Spannungsdifferenz über den Speicherdrosseln LL1, LL2, LL3. Die Spannungsdifferenz an den Speicherdrosseln LL1, LL2, LL3 kann durch die Ladung des Kondensators CS derartig beeinflusst werden, dass in entsprechenden Zeitabschnitten, wie in den Figuren 12 bis 26C dargestellt, an den Speicherdrosseln LL1, LL2, LL3 größere Spulenspannungen uLL1, uLL2, uLL3 anliegen, als vom Versorgungsnetz VN physikalisch bereitgestellt werden. Dadurch werden dem Versorgungsnetz VN in allen Phasen L1, L2, L3 im Wesentlichen sinusförmige Ströme entzogen, wodurch die Grenzwerte der PFC-Normen in den entsprechenden Leistungsklassen eingehalten werden können.

Hierzu erhalten der erste Transistor T1 und der zweite Transistor T2 jeweils von den erfassten Netzgrößen abhängige Steuersignale ST1, ST2 von der Steuereinheit SE, wodurch der erste Transistor T1 und der zweite Transistor T2 getaktet werden. Die durch die Ansteuerung der Transistoren T1, T2 durch die Steuereinheit SE bewirkte Taktung bestimmt unterschiedliche Zeitintervalle, wie beispielsweise eine Einschaltdauer TE des ersten Transistors T1, eine Einschaltdauer TE des zweiten Transistor T2 sowie eine Kurzschlussdauer TK, welche einen Kurzschlussbereich definiert, in der beide Transistoren T1, T2 gleichzeitig eingeschaltet beziehungsweise leitend sind. Die übrige Zeitdauer, in welcher der erste Transistor T1 beziehungsweise der zweite Transistor T2 nicht getaktet beziehungsweise leitend sind, wird als Ausschaltdauer TA definiert. Die Summe aus Einschaltdauer TE und Ausschaltdauer TA bilden eine Periodendauer TS. Die Reihenfolge der Zeitintervalle unterscheidet zwischen einer positiven Ansteuerung und einer negativen Ansteuerung. Diese spezielle Taktung wird folgend unter Bezugnahme auf die Figuren 12 und 13 detailliert beschrieben. Über die Länge der Zeitintervalle regelt die Steuereinheit SE die Modulation. Gleichzeitig wird über die Länge der Zeitintervalle und der Kurzschlussdauer TK damit auch die Höhe der Ausgangsgleichspannung UA geregelt. Während der Zeitintervalle wird der Kondensator CS geladen. Das Laden erfolgt in Bezug auf den Sternpunkt SP.

In einem Beispiel kann einer von den Zeitintervallen (Einschaltdauer TE, Ausschaltdauer TA) kürzer sein als der andere von dem Zeitintervall. Dadurch kann die Netzschaltung 100 einerseits auf eine sauber geregelte Ausgangsgleichspannung UA oder auf einen PFC-konformen sinusförmigen Stromentzug eingerichtet werden. Hierdurch kann eine ersten Taktperiode TS1 eingerichtet werden, bei welcher die Netzströme iNL1, iNL2, iNL3 die PFC-Grenzwerte durch Reduktion der Oberschwingungen ausreichend einhalten beziehungsweise Oberschwingungen reduzieren. Mit einer darauffolgenden zweiten Taktperiode TS2 kann die Ausgangsgleichspannung UA stabil gehalten werden. In einem weiteren nichteinschränkenden Beispiel kann ferner eine dritte Taktperiode TS3 hinzugefügt werden, um weitere Verbesserungen zu erreichen. Ferner können alle Taktperioden derart eingerichtet sein/werden, dass die Netzschaltung 100 nur auf eine sauber geregelte Ausgangsgleichspannung UA oder auf einen PFC-konformen sinusförmigen Stromentzug eingerichtet ist.

Fig. 12 zeigt einen Verlauf eines ersten Steuersignals ST1 für den ersten Transistor T1 und einen Verlauf eines zweiten Steuersignals ST2 für den zweiten Transistor T2 basierend auf der positiven Ansteuerung des ersten Transistors T1 und des zweiten Transistors T2 über die Zeit t.

Bei der positiven Ansteuerung werden die Steuereingänge AN des ersten und zweiten Transistors T1, T2 durch die Steuereinheit SE derart angesteuert, dass als erstes der erste Transistor T1 zwischen einem ersten Zeitpunkt t1 und einem dritten Zeitpunkt t3 für eine Einschaltdauer TE leitend ist/wird und danach der zweite Transistor T2 zwischen einem zweiten Zeitpunkt t2 und einem vierten Zeitpunkt t4 für die Einschaltdauer TE leitend ist/wird. Zwischen dem zweiten Zeitpunkt t2 und dem dritten Zeitpunkt t3, für eine Kurzschlussdauer TK, sind der erste und der zweite Transistor T1, T2 gleichzeitig leitend. Während das erste Steuersignal ST1 null ist, ist der erste Transistor T1 nichtleitend. Der erste Transistor T1 ist für eine Ausschaltdauer TA zwischen dem dritten Zeitpunkt t3 einer aktuellen Periodendauer TS, bestehend aus der Summe von Einschaltdauer TE und Ausschaltdauer TA, bis zum ersten Zeitpunkt t1 der nächsten Periodendauer, während der erste Transistor T1 von der Steuereinheit SE nicht angesteuert wird, nichtleitend. Während das zweite Steuersignal ST2 null ist, ist der zweite Transistor T2 nichtleitend. Der zweite Transistor T2 ist für die Ausschaltdauer TA zwischen dem vierten Zeitpunkt t4 der aktuellen Periodendauer TS bis zum zweiten Zeitpunkt t2 der nächsten Periodendauer, während der zweite Transistor T2 von der Steuereinheit SE nicht angesteuert wird, nichtleitend.

Ein Kehrwert der Periodendauer TS ergibt eine Taktfrequenz fS, oder fS = 1/TS, mit welcher der erste Transistor T1 und der zweite Transistor T2 durch die Ansteuerung der Steuereinheit SE getaktet werden. Zu beachten ist, dass die Taktung mit einer ausreichend hohen Taktfrequenz fS gegenüber der Netzfrequenz fN erfolgen muss, um den Aufwand einer Filterung der durch die Taktung hervorgerufenen Oberschwingungen möglichst gering zu halten.

Fig. 13 zeigt einen Verlauf des ersten Steuersignals ST1 für den ersten Transistor T1 und einen Verlauf des zweiten Steuersignals ST2 für den zweiten Transistor T2 basierend auf der negativen Ansteuerung des ersten Transistors T1 und des zweiten Transistors T2 über die Zeit t.

Bei der negativen Ansteuerung entsprechen die Einschaltdauer TE, Ausschaltdauer TA, Kurzschlussdauer TK und Schaltperiode TS jenen der positiven Ansteuerung, jedoch mit dem Unterschied, dass sie zu anderen Zeitpunkten beginnen beziehungsweise aufhören. Somit gilt für die Einschaltdauer TE, Ausschaltdauer TA, Kurzschlussdauer TK und Schaltperiode TS das gleiche wie bei der positiven Ansteuerung.

Bei der negativen Ansteuerung werden die Steuereingänge AN des ersten und zweiten Transistors T1, T2 durch die Steuereinheit SE derart angesteuert, dass als erstes der zweite Transistor T2 zwischen dem ersten Zeitpunkt t1 und dem dritten Zeitpunkt t3 für die Einschaltdauer TE leitend ist/wird und danach der erste Transistor T1 zwischen dem zweiten Zeitpunkt t2 und dem vierten Zeitpunkt t4 für die Einschaltdauer TE leitend ist/wird. Zwischen dem zweiten Zeitpunkt t2 und dem dritten Zeitpunkt t3, für die Kurzschlussdauer TK, sind der erste und der zweite Transistor T1, T2 gleichzeitig leitend. Der erste Transistor T1 ist für eine Ausschaltdauer TA zwischen dem vierten Zeitpunkt t4 der aktuellen Periodendauer TS bis zu einem zweiten Zeitpunkt t2 der nächsten Periodendauer, während der erste Transistor T1 von der Steuereinheit SE nicht angesteuert wird, nichtleitend. Der zweite Transistor T2 ist für die Ausschaltdauer TA zwischen dem dritten Zeitpunkt t3 der aktuellen Periodendauer TS bis zum ersten Zeitpunkt t1 der nächsten Periodendauer, während der zweite Transistor T2 von der Steuereinheit SE nicht angesteuert wird, nichtleitend.

Auch bei der negativen Ansteuerung gilt es zu beachten, dass die Taktung mit einer ausreichend hohen Taktfrequenz fS gegenüber der Netzfrequenz fN erfolgen muss.

Die Ausgangsgleichspannung UA kann optional über das Tastverhältnis TV von Einschaltdauer TE zu Ausschaltdauer TA oder Periodendauer TS des ersten und zweiten Transistors T1, T2 und in Zusammenhang mit der Kurzschlussdauer TK geregelt werden.

Mit der Netzschaltung 100 und der speziellen positiven und negativen Ansteuerung ist es möglich, aus einer Netzwechselspannung uN eine Ausgangsgleichspannung UA zu erzeugen, die kleiner (Tiefsetzen) oder größer (Hochsetzen) ist als die aus einer Standard-Dreiphasen-Gleichrichtung. Dies bedeutet, dass beim Hochsetzen die Ausgangsgleichspannung UA größer der Netzwechselspannung uN ist/wird, und dass beim Tiefsetzen die Ausgangsgleichspannung UA kleiner der Netzwechselspannung uN ist/wird. Die Höhe der Ausgangsgleichspannung UA ist dabei abhängig von der Taktung, wobei der Wechsel zwischen Hoch- und Tiefsetzen kontinuierlich möglich ist. Die Taktung bewirkt nicht nur ein Hoch- und Tiefsetzen der Ausgangsgleichspannung UA, sondern es werden gleichzeitig durch eine Verkopplung jeweils sinusförmige Phasenströme iNL1, iNL2, iNL3 aus dem Versorgungsnetz VN entzogen. Mit der Netzschaltung 100 ist ein fließender Übergang zwischen Tiefsetzen (UA < uN) und Hochsetzen (UA > uN) und umgekehrt möglich, so dass die Ausgangsgleichspannung UA in einem Weitspannungsbereich, beispielsweise von 0 Volt bis 1000 Volt, unter Einhaltung der PFC-Normen entsprechend geregelt werden kann.

Das Hoch- und Tiefsetzen wird bei der Netzschaltung 100 durch die Länge der Einschaltdauer TE beziehungsweise der Kurzschlussdauer TK bestimmt. Die in den dargestellten Steuergesetzen gemäß Fig. 12 und 13 vorliegenden physikalischen Zusammenhänge innerhalb der Netzschaltung 100 führen bei einer kurzen Kurzschlussdauer TK zu einer niedrigen Ausgangsgleichspannung UA, wodurch ein Tiefsetzen erreicht wird. Ferner führt eine kurze Kurzschlussdauer TK zu einer verbesserten Sinusform der Phasenströme iNL1, iNL2, iNL3 und somit zur Einhaltung der PFC-Normen. Die am wenigsten mit Oberschwingungen behafteten Sinusverläufe der Phasenströme iNL1, iNL2, iNL3 werden beim Tiefsetzen näherungsweise mit einer Kurzschlussdauer TK kleiner als 0,1 der Einschaltdauer TE, oder TK < 0,1*TE erreicht. Während eine geringfügige Veränderung der Kurzschlussdauer TK bei gleicher Einschaltdauer TE eine starke Änderung der Ausgangsgleichspannung UA bewirkt, kann die Ausgangsgleichspannung UA durch das Variieren der Einschaltdauer TE bei prozentual gleich langer Kurzschlussdauer TK feinjustiert bzw. geregelt werden.

Für das Hochsetzen wird eine längere Kurzschlussdauer TK benötigt. Eine längere Kurzschlussdauer TK führt zu einer Sinusform der Phasenströme iNL1, iNL2, iNL3, welche von einer optimalen Sinusform abweicht. Die am wenigsten mit Oberschwingungen behafteten Sinusverläufe der Phasenströme iNL1, iNL2, iNL3 werden beim Hochsetzen näherungsweise mit einer Kurzschlussdauer TK zwischen 0,2 bis 0,3 der Einschaltdauer TE, oder TK = 0,2 ... 0,3 *TE erreicht. Dabei gilt, dass umso länger die Kurzschlussdauer TK ist, desto höher die Ausgangsgleichspannung UA ist/wird. Auch gilt beim Hochsetzen, dass eine geringfügige Veränderung der Kurzschlussdauer TK bei gleicher Einschaltdauer TE eine starke Änderung der Ausgangsgleichspannung UA bewirkt. Zudem kann die Ausgangsgleichspannung UA durch das Variieren der Einschaltdauer TE bei prozentual gleich langer Kurzschlussdauer TK feinjustiert bzw. geregelt werden.

Dabei muss beachtet werden, dass auch eine am Ausgang OUT angeschlossene Last einen Einfluss auf die Einschaltdauer TE und Kurzschlussdauer TK hat. Die Einschaltdauer TE und Kurzschlussdauer TK sind damit generell abhängig von der gewünschten Ausgangsgleichspannung UA, der Netzwechselspannung uN und der zugehörigen Dimensionierung der Netzschaltung 100.

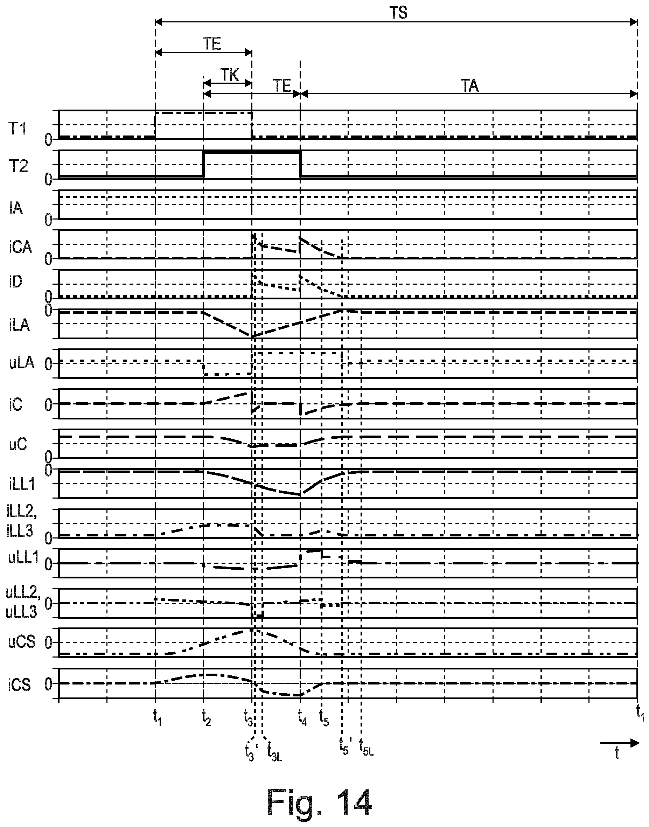

Fig. 14 bis 17 zeigen unterschiedliche Kennlinien basierend auf den Steuergesetzen gemäß Fig. 12 und 13 für die Ansteuerung des ersten Transistors T1 und des zweiten Transistors T2 der Netzschaltung 100 im eingeschwungenen Zustand nach dem ersten Ausführungsbeispiel gemäß Fig. 3. Dabei sind zur besseren Veranschaulichung der Verlauf der Steuersignale ST1, ST2 aus den Fig. 12 und 13 ebenfalls dargestellt, um die Zeitpunkte für die jeweiligen Zeitintervalle zu bestimmen. Der Verlauf des ersten Steuersignals ST1 und des zweiten die Steuersignals ST2 wird der kürze Halber im Folgenden nicht noch einmal wiederholt.

Ferner sind in den Fig. 14 bis 17 der Verlauf des Ausgangsstroms IA, der Verlauf des Ausgangskondensatorstroms iCA, der Verlauf eines Diodenstroms iD der Diode D, umfassend mindestens eine von der Positivdiode Dp und Negativdiode Dn, der Verlauf des Ausgangsspulenstroms iLA, der Verlauf der Ausgangsspulenspannung uLA, der Verlauf des Strangkondensatorstroms iC, der Verlauf der Strangkondensatorspannung uC, der Verlauf des Spulenstroms iLL1, der Verlauf des Spulenstroms iLL23, entsprechend der Summe aus Spulenstrom iLL2 und iLL3, der Verlauf der Spulenspannung uLL1, der Verlauf der Spulenspannung uLL2 und uLL3,welche überlappend verlaufen, der Verlauf der Kondensatorspannung uCS und der Verlauf des Kondensatorstroms iCS über die Zeit t dargestellt. Der Verlauf des Ausgangsstroms IA bleibt über die gesamte Periodendauer TS konstant größer null Ampere.

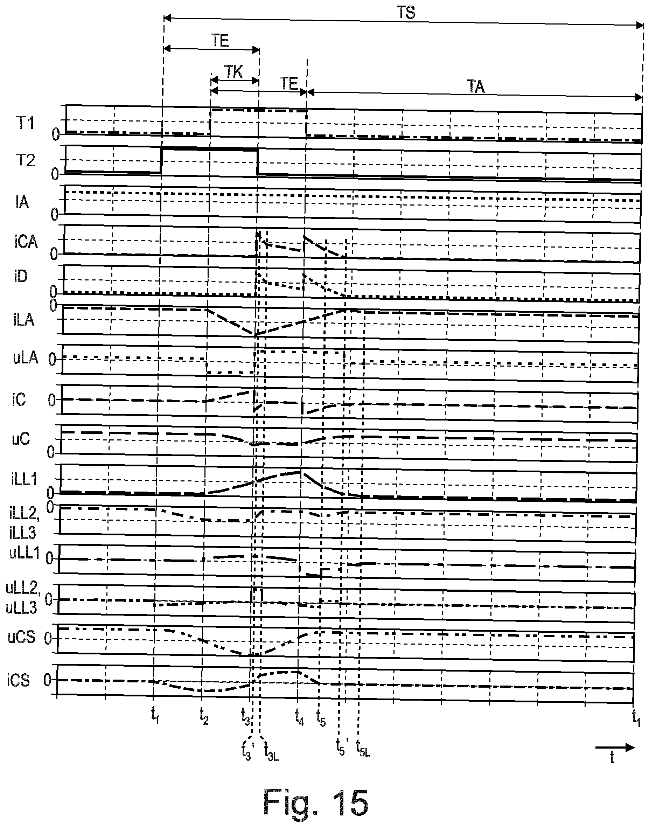

Fig. 14 und 15 zeigen unterschiedliche Kennlinien, welche sich bei der Netzschaltung 100 nach dem ersten Ausführungsbeispiel durch die positive Ansteuerung und die negative Ansteuerung für das Hochsetzen ergeben.

Fig. 14 zeigt wesentliche Kennlinien bei der positiven Ansteuerung in Abhängigkeit der Taktung des ersten und zweiten Transistors T1, T2 der Netzschaltung 100 beim Hochsetzen über die Zeit t. Es gelten die beispielhaften Annahmen, dass die Strangspannungen u2 und u3 an den Phasen L2 und L3 betragsmäßig gleich groß und größer 0 Volt sind, während die Strangspannung u1 an der Phase L1 kleiner als 0 Volt ist. Dementsprechend sind die Speicherdrosseln LL2 und LL3 über den positiven Zweig pZ des Gleichrichters GR mit dem ersten Transistor T1 verbunden. Die Gleichrichterdioden D3 und D5 sind leitend. Die Speicherdrossel LL1 hingegen ist mit dem zweiten Transistor T2, über den negativen Zweig nZ des Gleichrichters GR verbunden. Die Gleichrichterdiode D2 ist leitend. Diese Annahmen sind beispielhaft und gelten für die im Folgenden beschrieben Kennlinien, bei welchen die Netzwechselspannungen zweier Phasen größer als null sind. Die gewählten Annahmen sollen den Umfang der Erfindung nicht beschränken und könnten in anderer Weise getroffen werden.

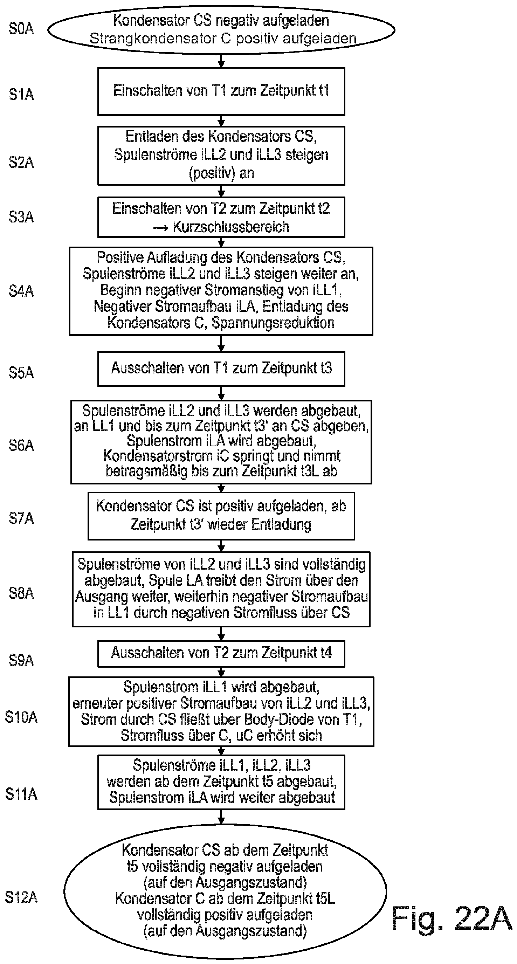

Unter zusätzlicher Bezugnahme auf Fig. 22A, ist zu Beginn in Schritt S0A der Periodendauer TS zum ersten Zeitpunkt t1 der Kondensator CS negativ aufgeladen (uCS < 0) und der Strangkondensator C positiv aufgeladen (uC > 0). Zum ersten Zeitpunkt t1 mit Schritt S1A wird der erste Transistor T1 leitend beziehungsweise eingeschaltet. Dadurch liegt die Spannungsdifferenz, welche sich aus der Netzwechselspannung uN der jeweiligen Phase und der Kondensatorspannung uCS ergibt, als Spulenspannungen uLL2 und uLL3 an den Speicherdrosseln LL2 und LL3 an. Die Werte der Spulenspannungen uLL2 und uLL3 sind dementsprechend betragsmäßig größer als die Werte der Netzwechselspannungen uN der Phasen L2 und L3 gegenüber dem Nullpotential. Hierdurch beginnt mit dem Schritt S2A sich in den Speicherdrosseln LL2 und LL3 ein Strom aufzubauen, wodurch die Spulenströme iLL2 und iLL3 positiv ansteigen. Durch den positiv steigenden Kondensatorstrom iCS wird der Kondensator CS bis zur Kondensatorspannung uCS = 0V entladen. Der Spulenstrom iLL23, als Summe der Spulenströme iLL2 und iLL3 der Speicherdrosseln LL2 und LL3, steigt entsprechend dem Kondensatorstrom iCS bis zum zweiten Zeitpunkt t2 positiv an.

Zum zweiten Zeitpunkt t2 wird mit Schritt S3A der zweite Transistor T2 leitend, während der erste Transistor T1 ebenfalls leitend ist. Der zweite Transistor T2 wird durch die Steuereinheit SE als leitend angesteuert, wenn eine eingestellte Zeitdauer verstrichen ist oder alternativ, wenn die Kondensatorspannung uCS gleich null Volt wird. Hierdurch wird der Gleichrichter GR für die Kurzschlussdauer TK kurzgeschlossen, was dem in den Fig. 12 und 13 dargestellten Kurzschlussbereich entspricht. Mit Schritt S4A wird der Kondensator CS ab diesem zweiten Zeitpunkt t2 ausgehend vom entladenen Zustand positiv aufgeladen, wobei der Kondensatorstrom iCS ab dem zweiten Zeitpunkt t2 betragsmäßig abnimmt (Richtung null geht). Währenddessen bauen sich die Spulenströme iLL2 und iLL3 in den Speicherdrosseln LL2 und LL3 weiter positiv auf beziehungsweise steigen während der Kurzschlussdauer TK weiter positiv an.

Durch das Ansteuern des zweiten Transistors T2 liegt die Spannungsdifferenz, sich aus der Netzwechselspannung uN der Phase L1 und dem aktuellen Wert der Kondensatorspannung uCS als Spulenspannung uLL1, an der Speicherdrossel LL1 an. Der Wert der Spulenspannung uLL1 ist dementsprechend betragsmäßig (negativ) größer als der Wert der Netzwechselspannung uN der Phase L1 gegenüber dem Nullpotential. In der Speicherdrossel LL1 beginnt dementsprechend ab diesem Zeitpunkt ein negativer Stromaufbau des Spulenstroms iLL1.

Bedingt durch den Kurzschluss über die Transistoren T1, T2 liegt eine negative Ausgangsspulenspannung uLA an der Ausgangsspule LA an. Dementsprechend baut sich während der Kurzschlussdauer TK ein negativer Ausgangsspulenstrom iLA in der Ausgangsspule LA auf. Aufgrund des betragsmäßig negativen Anstiegs des Ausgangsspulenstroms iLA stellt sich ein positiver Fluss eines Strangkondensatorstroms iC in den Strangkondensator C ein, wodurch sich der Strangkondensator C ab dem zweiten Zeitpunkt t2 zu entladen beginnt. Dementsprechend nimmt eine Strangkondensatorspannung uC des Strangkondensators C betragsmäßig ab.

Während dieser Zeitspanne erfolgt der Hauptanteil des Energieeintrages in die Netzschaltung 100. Das Ansteuern des zweiten Transistors T2 kann wahlweise gesteuert werden oder alternativ dann erfolgen, wenn die Kondensatorspannung uCS gleich null Volt wird.

Zum dritten Zeitpunkt t3 wird mit Schritt S5A der zum Zeitpunkt t1 leitende erste Transistor T1 nach der Einschaltdauer TE durch die Steuereinheit SE wieder abgeschaltet beziehungsweise nichtleitend. Der zweite Transistor T2 bleibt hierbei noch leitend. Ab dem dritten Zeitpunkt t3 treiben die Speicherdrosseln LL2 und LL3, in welchen sich während der Einschaltdauer TE des ersten Transistors T1 die positiven Spulenströme iLL2, iLL3 aufgebaut haben, diese Spulenströme iLL2, iLL3 eingangsseitig über die Gleichrichterdioden D3, D5, den Strangkondensator C sowie ausgangsseitig über die Diode D, umfassend mindestens eine von der Positivdiode Dp und der Negativdiode Dn, und den Lastzweig beziehungsweise Ausgang OUT. Dementsprechend bauen sich mit Schritt S6A die Spulenströme iLL2, iLL3 in den Speicherdrosseln LL2 und LL3 wieder ab. Da der zweite Transistor T2 zu diesem Zeitpunkt noch leitend ist, teilt sich die Summe der Spulenströme aus iLL2, iLL3 nach dem Lastzweig kurzzeitig am Knoten unterhalb des zweiten Transistors T2 zwischen der Speicherdrossel LL1, in welcher sich der Spulenstrom iLL1 weiter aufbaut, und dem Kondensator CS auf. Der Kondensatorstrom iCS nimmt ab dem Zeitpunkt t3 stärker ab.

Bedingt durch das Abschalten des ersten Transistors T1 springt die zuvor negative Ausgangsspulenspannung uLA (uLA < 0 V) an der Ausgangsspule LA ins Positive (uLA > 0 V). Dementsprechend beginnt sich der in der Ausgangsspule LA aufgebaute negative Ausgangsspulenstrom iLA wieder betragsmäßig in Richtung null Ampère abzubauen.

Der Strangkondensatorstrom iC des Strangkondensators C ändert sich durch den Abbau des Ausgangsspulenstroms iLA in der Ausgangsspule LA sprunghaft von einem Wert größer null Ampere (iC > 0) auf einen Wert kleiner null Ampere (iC < 0) und nimmt ab dem dritten Zeitpunkt t3 betragsmäßig bis zum Zeitpunkt t3L ab. Dementsprechend nimmt die Strangkondensatorspannung uC betragsmäßig ab dem dritten Zeitpunkt t3 zu.

Die maximale positive Kondensatorspannung uCS wird im Zeitpunkt t3` erreicht, wenn der Kondensatorstrom iCS gleich null Ampere wird, oder iCS = 0 A. Ab diesem Zeitpunkt t3' im Schritt S7A stellt sich ein negativer Fluss des Kondensatorstroms iCS über den Kondensator CS ein. Ab dem Zeitpunkt t3' wird der Kondensator CS bis zu einem fünften Zeitpunkt t5 entladen und wieder negativ aufgeladen. Der negative Kondensatorstrom iCS addiert sich ab dem Zeitpunkt t3' zum Fluss der Summe der Spulenströme iLL2, iLL3 der Speicherdrosseln LL2 und LL3 hin zu der Speicherdrossel LL1 hinzu.

Der Ausgangskondensator CA wird nach dem Abschalten des ersten Transistors T1 zum Zeitpunkt t3 bis zum Zeitpunkt t5L, wenn die in den Speicherdrosseln LL1, LL2, LL3 gespeicherte Energie vollständig abgebaut ist, mit Energie aufgeladen. In der verbleibenden Zeit der Periodendauer TS wird die im Ausgangskondensator CA gespeicherte Energie an die am Ausgang OUT angeschlossene Last abgegeben.

Mit Schritt S8A zum Zeitpunkt t3L bauen sich die Spulenströme iLL2 und iLL3 in den Speicherdrosseln LL2 und LL3 vollständig ab. Die Spulenströme iLL2 und iLL3 entsprechen zum Zeitpunkt t3L gleich null Ampere. Der Ausgangsspulenstrom iLA im Ausgangsbereich B2 der Netzschaltung 100 wird ab dem Zeitpunkt t3L vollständig von der Ausgangsspule LA getrieben, wobei der negative Ausgangsspulenstrom iLA weiterhin betragsmäßig abnimmt. Folglich fließt kein Strom zwischen Eingang IN und Ausgang OUT der Netzschaltung 100 und damit kein Strom mehr durch den Strangkondensator C. Die Strangkondensatorspannung uC verbleibt bis zum Zeitpunkt t4 auf einem konstanten Wert. Der gesamte negative Kondensatorstrom iCS fließt ab dem Zeitpunkt t3L weiterhin über die Speicherdrossel LL1, wodurch der Spulenstrom iLL1 weiter betragsmäßig negativ zunimmt.

Zum vierten Zeitpunkt t4 wird mit Schritt S9A der noch leitende zweite Transistor T2 nach der Einschaltdauer TE durch die Schalteinheit SE derart angesteuert, dass der zweite Transistor T2 nichtleitend wird. Die Speicherdrossel LL1 treibt den Spulenstrom iLL1 ab dem vierten Zeitpunkt t4 wieder über den Strangkondensator C, die Diode D, umfassend mindestens eine von der Positivdiode Dp und der Negativdiode Dn, und die am Ausgang der Netzschaltung 100 angeschlossene Last weiter, wobei sich der Spulenstrom iLL1 zu dem weiterhin abbauenden Ausgangsspulenstrom iLA der Ausgangsspule LA hinzuaddiert. Der Kondensatorstrom iCS fließt ab dem vierten Zeitpunkt t4 über den einzig verbleibenden Stromzweig in Form der Body-Diode des zuerst abgeschalteten ersten Transistors T1 (oder einer parallel dazu geschalteten Freilaufdiode) und wird ab dem vierten Zeitpunkt t4 betragsmäßig wieder kleiner. Hierdurch wird die Kondensatorspannung uCS des Kondensators CS auf ihren ursprünglichen, wie vor dem ersten Zeitpunkt t1, negativen Wert aufgeladen. Parallel dazu beginnen sich in den beiden Speicherdrosseln LL2 und LL3 wieder positive Spulenströme iLL2 und iLL3 aufzubauen.

Bedingt durch den von der Speicherdrossel LL1 über den Ausgang OUT getriebenen Spulenstrom iLL1 fließt im Schritt S10A wieder ein Strom zwischen Eingang IN und Ausgang OUT der Netzschaltung 100 und damit ein Strom durch den Strangkondensator C. Der Strangkondensatorstrom iC springt zum vierten Zeitpunkt t4 ausgehend von einem Wert von 0 Ampere auf einen negativen Wert (iC < 0 A) und nimmt ab dem vierten Zeitpunkt t4 betragsmäßig ab. Dementsprechend nimmt die Kondensatorspannung uC ab dem vierten Zeitpunkt t4 betragsmäßig zu.

Zum fünften Zeitpunkt t5 mit Schritt S11A entspricht der Betrag des Spulenstroms iLL1 der Speicherdrossel LL1 der Summe des Betrags aus den Spulenströmen iLL2 und iLL3 der Speicherdrosseln LL2 und LL3. Damit wird der Kondensatorstrom iCS gleich null Ampere beziehungsweise iCS = 0 A. Dadurch fließt ab dem fünften Zeitpunkt t5 kein Strom mehr über die Freilaufdiode des ersten Transistors T1. Der Kondensator CS ist ab diesem fünften Zeitpunkt t5 mit Schritt S12A vollständig auf den negativen Anfangswert der Kondensatorspannung uCS aufgeladen, welcher für die nächste Periodendauer TS wieder zur Verfügung steht. Die Speicherdrosseln LL1, LL2, LL3 treiben weiterhin den Strom über den Ausgang OUT, wobei sich der Strom bis zum Zeitpunkt t5' zum Ausgangsspulenstrom iLA der Ausgangsspule LA hinzuaddiert. Dabei bauen sich die verbleibenden Spulenströme iLL1, iLL2, iLL3 linear mit der Zeit bis zum Zeitpunkt t5L ab.

Zum Zeitpunkt t5L ist der Ausgangsspulenstrom iLA der Ausgangsspule LA vollständig abgebaut, sowie auch die Spulenströme iLL1, iLL2, iLL3 der Speicherdrosseln LL1, LL2, LL3. Folglich fließt kein Strom mehr zwischen Eingang IN und Ausgang OUT der Netzschaltung 100 und damit kein Strangkondensatorstrom iC mehr durch den Strangkondensator C. Die Strangkondensatorspannung uC ist ab dem Zeitpunkt t5L vollständig auf den positiven Wert aufgeladen, welcher für die nächste Periodendauer TS wieder zur Verfügung steht.

Der Wert der Spulenströme iLL1 = iLL2 = iLL3 = 0 zum Zeitpunkt t5L kann dabei im Lückbetrieb entweder vor dem Ende der Periodendauer TS, oder beim Lückgrenzbetrieb mit dem Ende der Periodendauer TS erreicht werden. Der Wert des Ausgangsspulenstroms iLA = 0 zum Zeitpunkt t5' kann ebenfalls entweder vor dem Ende der Periodendauer TS, oder mit dem Ende der Periodendauer TS erreicht werden. Dies hat hinsichtlich des Lückgrenzbetriebs oder des Lückbetriebs keine Auswirkungen auf den Betrieb der Netzschaltung 100.

Beim Lückgrenzbetrieb wird einer von den Spulenströmen iLL1, iLL2, iLL3 exakt zum Ende einer Periodendauer TS zu null Ampere. Beim Lückbetrieb wird eine Pause zwischen Stromabbau und dem Beginn der neuen Periodendauer TS eingefügt (der Strom "lückt" oder hat eine Lücke). Der Lückbetrieb sowie der Lückgrenzbetrieb zählt zum Standard bei der Anwendung von Hochsetzstellern.

Fig. 15 zeigt wesentliche Kennlinien bei der negativen Ansteuerung in Abhängigkeit der Taktung des ersten und zweiten Transistors T1, T2 der Netzschaltung 100 beim Hochsetzen über die Zeit t. Es gelten die beispielhaften Annahmen, dass die Strangspannung u1 der Phase L1 größer null Volt ist, während die Strangspannungen u2 und u3 der Phasen L2 und L3 betragsmäßig gleich groß kleiner als null Volt sind. Dementsprechend ist die Speicherdrossel LL1 über den positiven Zweig pZ des Gleichrichters GR mit dem ersten Transistor T1 verbunden. Die Gleichrichterdiode D1 ist leitend. Die Speicherdrosseln LL2 und LL3 hingegen sind mit dem zweiten Transistor T2 über den negativen Zweig nZ des Gleichrichters GR verbunden. Die Gleichrichterdioden D4 und D6 sind leitend. Diese Annahmen sind beispielhaft und gelten für die im Folgenden beschrieben Kennlinien, bei welchen die Netzspannungen zweier Phasen kleiner als null sind. Die gewählten Annahmen sollen den Umfang der Erfindung nicht beschränken und könnten in anderer Weise getroffen werden.

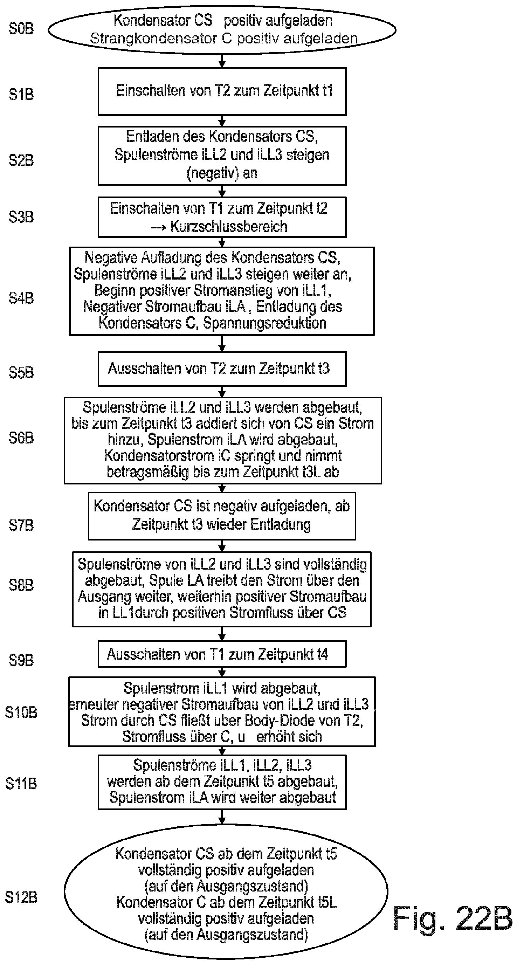

Unter zusätzlicher Bezugnahme auf Fig. 22B, ist zu Beginn in Schritt S0B der Kondensator CS positiv aufgeladen (uCS > 0) und der Strangkondensator C ebenfalls positiv aufgeladen (uC > 0). Zum ersten Zeitpunkt t1 mit Schritt S1B wird der zweite Transistor T2 leitend beziehungsweise eingeschaltet. Dadurch liegt die Spannungsdifferenz, welche sich aus der Netzwechselspannung uN der jeweiligen Phase und der Kondensatorspannung uCS ergibt, als Spulenspannungen uLL2 und uLL3 an den Speicherdrosseln LL2 und LL3 an. Die Werte der Spulenspannungen uLL2 und uLL3 sind dementsprechend betragsmäßig größer als die Werte der Netzwechselspannungen uN der Phasen L2 und L3 gegenüber dem Nullpotential. Hierdurch beginnt mit Schritt S2B sich in den Speicherdrosseln LL2 und LL3 ein Strom aufzubauen, wodurch die Spulenströme iLL2 und iLL3 negativ ansteigen. Durch den negativ steigenden Kondensatorstrom iCS wird der Kondensator CS bis zur Kondensatorspannung uCS = 0V entladen. Die Spulenströme iLL2 und iLL3 der Speicherdrosseln LL2 und LL3, steigen entsprechend dem Kondensatorstrom iCS bis zum zweiten Zeitpunkt t2 negativ an.

Zum zweiten Zeitpunkt t2 wird mit Schritt S3B der erste Transistor T1 leitend, während der zweite Transistor T2 ebenfalls leitend ist. Hierdurch wird der Gleichrichter GR für die Kurzschlussdauer TK kurzgeschlossen, was dem in den Fig. 12 und 13 dargestellten Kurzschlussbereich entspricht. Mit Schritt S4B wird der Kondensator CS ab diesem zweiten Zeitpunkt t2 ausgehend vom entladenen Zustand negativ geladen, wobei der Kondensatorstrom iCS ab dem zweiten Zeitpunkt t2 betragsmäßig abnimmt (Richtung null geht).

Durch das Ansteuern des ersten Transistors T1 liegt die Spannungsdifferenz, sich aus der Netzwechselspannung uN der Phase L1 und dem aktuellen Wert der Kondensatorspannung uCS als Spulenspannung uLL1, an der Speicherdrossel LL1 an.

Der Wert der Spulenspannung uLL1 ist dementsprechend betragsmäßig (positiv) größer als der Wert der Netzwechselspannung uN der Phase L1 gegenüber dem Nullpotential. In der Speicherdrossel LL1 beginnt dementsprechend ab diesem Zeitpunkt ein positiver Stromaufbau des Spulenstroms iLL1.

Bedingt durch den Kurzschluss über die Transistoren T1, T2 liegt eine negative Ausgangsspulenspannung uLA an der Ausgangsspule LA an. Dementsprechend baut sich während der Kurzschlussdauer TK ein negativer Ausgangsspulenstrom iLA in der Ausgangsspule LA auf. Aufgrund des betragsmäßig negativen Anstiegs des Ausgangsspulenstroms iLA stellt sich ein positiver Fluss eines Strangkondensatorstroms iC in den Strangkondensator C ein, wodurch sich der Strangkondensator C ab dem zweiten Zeitpunkt t2 zu entladen beginnt. Dementsprechend nimmt eine Strangkondensatorspannung uC des Strangkondensators C betragsmäßig ab.

Während dieser Zeitspanne erfolgt der Hauptanteil des Energieeintrages in die Netzschaltung 100. Das Ansteuern des ersten Transistors T1 kann wahlweise gesteuert werden oder alternativ dann erfolgen, wenn die Kondensatorspannung uCS gleich null Volt wird.

Zum dritten Zeitpunkt t3 wird mit Schritt S5B der zum Zeitpunkt t1 leitende zweite Transistor T2 nach der Einschaltdauer TE durch die Steuereinheit SE wieder abgeschaltet. Der erste Transistor T1 bleibt hierbei noch leitend. Ab dem dritten Zeitpunkt t3 treiben die Speicherdrosseln LL2 und LL3, in welchen sich während der Einschaltdauer TE des zweiten Transistors T2 die negativen Spulenströme iLL2 und iLL3 aufgebaut haben,, diese Spulenströme iLL2 und iLL3 eingangsseitig über die Gleichrichterdioden D4, D6, den Strangkondensator C sowie ausgangsseitig über die Diode D, umfassend mindestens eine von der Positivdiode Dp und der Negativdiode Dn, und den Lastzweig. Dementsprechend bauen sich mit Schritt S6B die Spulenströme iLL2, iLL3 in den Speicherdrosseln LL2 und LL3 wieder ab. Da der erste Transistor T1 zu diesem Zeitpunkt noch leitend ist, addiert sich vor dem Knoten oberhalb des ersten Transistors T1 zur Summe der Spulenströme aus iLL2 und iLL3 aufgrund des negativen Flusses des Kondensatorstroms iCS durch den Kondensator CS kurzzeitig ein positiver Strom hinzu. Der Kondensatorstrom iCS nimmt ab dem Zeitpunkt t3 stärker zu.

Bedingt durch das Abschalten des zweiten Transistors T2 springt die zuvor negative Ausgangsspulenspannung uLA (uLA < 0 V) an der Ausgangsspule LA ins Positive (uLA > 0 V). Dementsprechend beginnt sich der in der Ausgangsspule LA aufgebaute negative Ausgangsspulenstrom iLA wieder betragsmäßig in Richtung null Ampère abzubauen.

Der Strangkondensatorstrom iC des Strangkondensators C ändert sich durch den Abbau des Ausgangsspulenstroms iLA in der Ausgangsspule LA sprunghaft von einem Wert größer null Ampere (iC > 0) auf einen Wert kleiner null Ampere (iC < 0) und nimmt ab dem dritten Zeitpunkt t3 betragsmäßig bis zum Zeitpunkt t3L betragsmäßig ab. Dementsprechend nimmt die Strangkondensatorspannung uC betragsmäßig ab dem dritten Zeitpunkt t3 zu.

Die maximale positive Kondensatorspannung uCS wird im Zeitpunkt t3` erreicht, wenn der Kondensatorstrom iCS gleich null Ampere wird, oder iCS = 0 A. Ab diesem Zeitpunkt t3' mit Schritt S7B stellt sich ein positiver Kondensatorstrom iCS über den Kondensator CS ein. Der Kondensator CS wird wieder entladen. Der positive Kondensatorstrom iCS des Kondensators CS subtrahiert sich ab dem Zeitpunkt t3' vom Spulenstrom iLL1 der Speicherdrossel LL1. Der verbleibende Strom fließt zu den Spulen LL2 und LL3.

Mit Schritt S8B um Zeitpunkt t3L bauen sich die Spulenströme iLL2 und iLL3 der Speicherdrosseln LL2 und LL3 vollständig ab. Die Spulenströme iLL2 und iLL3 entsprechen Der Spulenstrom iLL23 entspricht zum Zeitpunkt t3L gleich null Ampere. Der Ausgangsspulenstrom iLA im Ausgangsbereich B2 der Netzschaltung 100 wird ab dem Zeitpunkt t3L vollständig von der Ausgangsspule LA getrieben, wobei der negative Ausgangsspulenstrom iLA weiterhin betragsmäßig abnimmt. Folglich fließt kein Strom zwischen Eingang IN und Ausgang OUT der Netzschaltung 100 und damit kein Strom mehr durch den Strangkondensator C. Die Strangkondensatorspannung uC verbleibt bis zum Zeitpunkt t4 auf einem konstanten Wert. Der gesamte positive Kondensatorstrom iCS fließt ab dem Zeitpunkt t3L weiterhin über die Speicherdrossel LL1, wodurch der Spulenstrom iLL1 weiter betragsmäßig positiv zunimmt.

Zum vierten Zeitpunkt t4 wird mit Schritt S9B der noch leitende erste Transistor T1 nach der Einschaltdauer TE durch die Schalteinheit SE derart angesteuert, dass der erste Transistor T1 nichtleitend wird. Die Speicherdrossel LL1 treibt den Spulenstrom iLL1 ab dem vierten Zeitpunkt t4 wieder über den Strangkondensator C, die Diode D, umfassend mindestens eine von der Positivdiode Dp und der Negativdiode Dn, und die am Ausgang der Netzschaltung 100 angeschlossene Last weiter, wobei sich der Spulenstrom iLL1 zu dem weiterhin abbauenden Ausgangsspulenstrom iLA der Ausgangsspule LA hinzuaddiert. Der Kondensatorstrom iCS fließt ab dem vierten Zeitpunkt t4 über den einzig verbleibenden Stromzweig in Form der Body-Diode des zuerst abgeschalteten zweiten Transistors T2 (oder einer parallel dazu geschalteten Freilaufdiode) und wird ab dem vierten Zeitpunkt t4 betragsmäßig wieder kleiner. Hierdurch wird die Kondensatorspannung uCS des Kondensators CS auf seinen ursprünglichen, wie vor dem ersten Zeitpunkt t1, positiven Wert aufgeladen. Parallel dazu beginnen sich in den beiden Speicherdrosseln LL2 und LL3 wieder negative Spulenströme iLL2 und iLL3 aufzubauen.

Bedingt durch den von der Speicherdrossel LL1 über den Ausgang OUT getriebenen Spulenstrom iLL1 fließt im Schritt S10B wieder ein Strom zwischen Eingang IN und Ausgang OUT der Netzschaltung 100 und damit ein Strom durch den Strangkondensator C. Der Strangkondensatorstrom iC springt zum vierten Zeitpunkt t4 ausgehend von einem Wert von 0 Ampere auf einen negativen Wert (iC < 0 A) und nimmt ab dem vierten Zeitpunkt t4 betragsmäßig ab. Dementsprechend nimmt die Kondensatorspannung uC ab dem vierten Zeitpunkt t4 betragsmäßig zu.

Zum fünften Zeitpunkt t5 mit Schritt S11B entspricht der Betrag des Spulenstroms iLL1 der Speicherdrossel LL1 der Summe des Betrags aus den Spulenströmen iLL2 und iLL3 der Speicherdrosseln LL2 und LL3. Damit wird der Kondensatorstrom iCS gleich null Ampere beziehungsweise iCS = 0 A. Dadurch fließt ab dem fünften Zeitpunkt t5 kein Strom mehr über die Freilaufdiode des zweiten Transistors T2. Der Kondensator CS ist ab diesem fünften Zeitpunkt t5 mit Schritt S12B vollständig auf den positiven Anfangswert der Kondensatorspannung uCS aufgeladen, welcher für die nächste Periodendauer TS wieder zur Verfügung steht. Die Speicherdrosseln LL1, LL2, LL3 treiben weiterhin den Strom über den Ausgang OUT, wobei sich der Strom bis zum Zeitpunkt t5' zum Ausgangsspulenstrom iLA der Ausgangs-spule LA hinzuaddiert. Dabei bauen sich die verbleibenden Spulenströme iLL1, iLL2, iLL3 linear mit der Zeit bis zum Zeitpunkt t5L ab.

Zum Zeitpunkt t5L ist der Ausgangsspulenstrom iLA der Ausgangsspule LA vollständig abgebaut, sowie auch die Spulenströme iLL1, iLL2, iLL3 der Speicherdrosseln LL1, LL2, LL3. Folglich fließt kein Strom mehr zwischen Eingang IN und Ausgang OUT der Netzschaltung 100 und damit kein Strangkondensatorstrom iC mehr durch den Strangkondensator C. Die Strangkondensatorspannung uC ist ab dem Zeitpunkt t5L vollständig auf den positiven Wert aufgeladen, welcher für die nächste Periodendauer TS wieder zur Verfügung steht.

Der Wert der Spulenströme iLL1 = iLL2 = iLL3 = 0 zum Zeitpunkt t5L kann dabei im Lückbetrieb entweder vor dem Ende der Periodendauer TS, oder beim Lückgrenzbetrieb mit dem Ende der Periodendauer TS erreicht werden. Der Wert des Ausgangsspulen-stroms iLA = 0 zum Zeitpunkt t5' kann ebenfalls entweder vor dem Ende der Periodendauer TS, oder mit dem Ende der Periodendauer TS erreicht werden. Dies hat hinsichtlich des Lückgrenzbetriebs oder des Lückbetriebs keine Auswirkungen auf den Betrieb der Netz-schaltung 100.

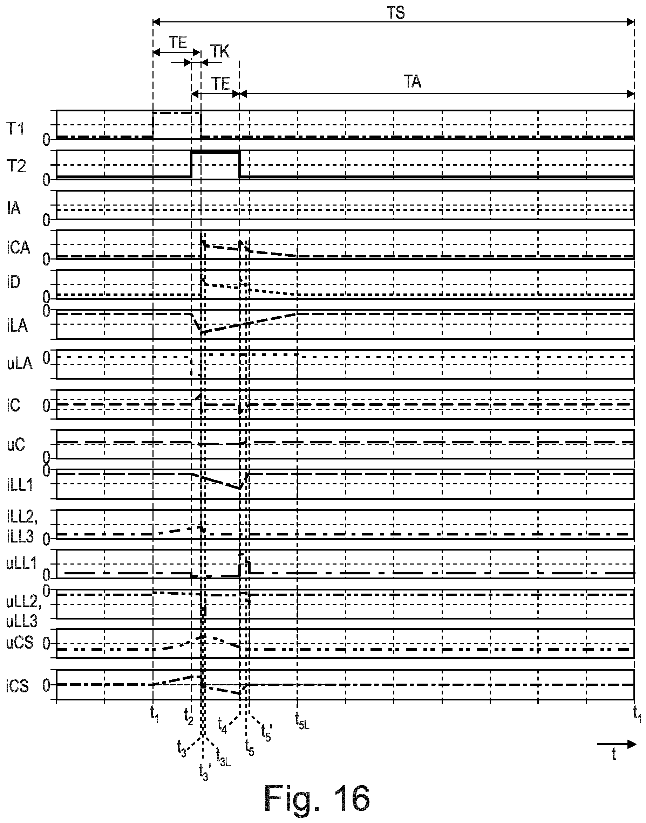

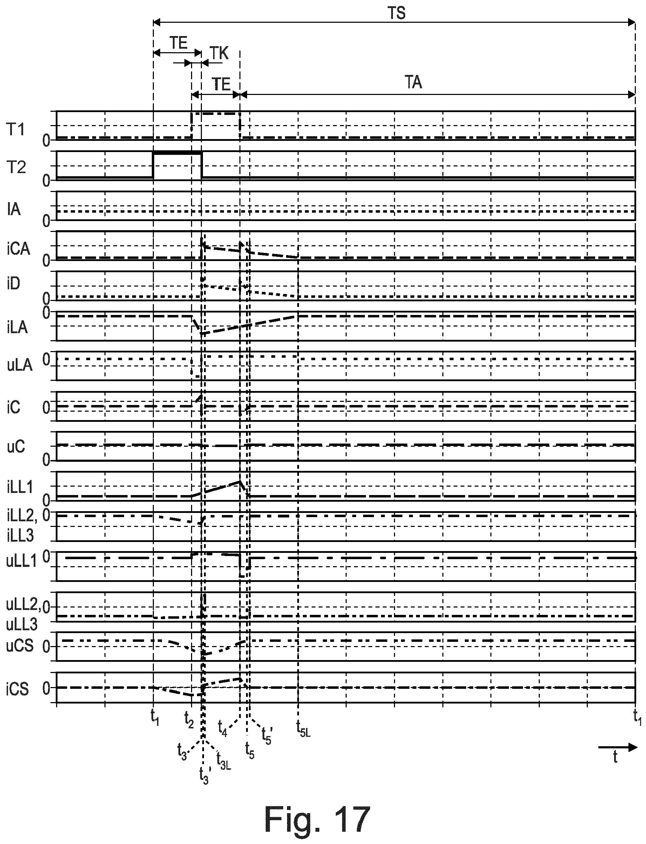

Fig. 16 und 17 zeigen unterschiedliche Kennlinien, welche sich bei der Netzschaltung 100 nach dem ersten Ausführungsbeispiel durch die positive Ansteuerung und die negative Ansteuerung für das Tiefsetzen ergeben.

Die Verläufe der Kennlinien in den Fig. 16 und 17 für das Tiefsetzen unterscheiden sich von den Verläufen der Kennlinien für das Hochsetzen gemäß den Fig. 14 und 15 nur dadurch, dass sich aufgrund der unterschiedlichen Verhältnisse der Kurzschlussdauer TK zu Einschaltdauer TE die Länge der einzelnen Zeitintervalle zwischen den einzelnen Zeitpunkten t1, t2, t3, t3', t3L, t4, t5, t5', t5L unterscheiden.

Durch die unterschiedlichen Verhältnisse der Kurzschlussdauer TK zu Einschaltdauer TE beim positiven Ansteuern und negativen Ansteuern des ersten Transistors T1 und des zweiten Transistors T2 der Netzschaltung 100 nach dem ersten Ausführungsbeispiel beim Hochsetzen (TK = 0,2... 0,3*TE), und beim Tiefsetzen (TK < 0,1*TE) kann ohne zusätzliche oder nachgeschaltete Schaltung mit der vorliegenden Netzschaltung 100 aus einer Netzwechselspannung uN eine größere oder kleinere Ausgangsgleichspannung UA erzeugt werden.

Die positive Ansteuerung und negative Ansteuerung für das Hochsetzen und Tiefsetzen der Netzschaltung 100 nach dem ersten Ausführungsbeispiel gemäß den Fig. 14 bis 17 kann in analoger Weise auch für die positive Ansteuerung und negative Ansteuerung für das Hochsetzen und Tiefsetzen der Netzschaltung 100 nach dem zweiten Ausführungsbeispiel angewendet werden.

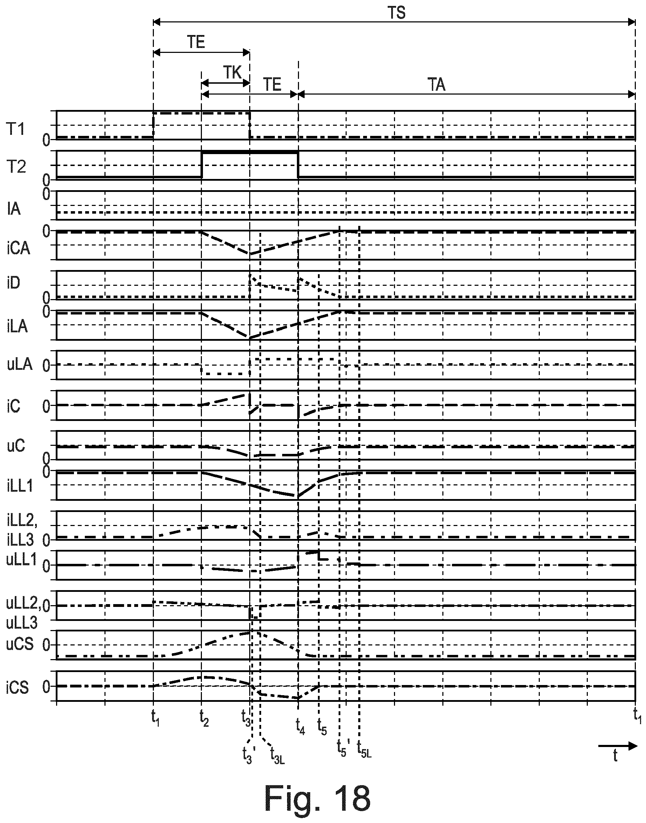

Fig. 18 bis 21 zeigen unterschiedliche Kennlinien basierend auf den Steuergesetzen gemäß Fig. 12 und 13 für die Ansteuerung des ersten Transistors T1 und des zweiten Transistors T2 der Netzschaltung 100 im eingeschwungenen Zustand nach dem zweiten Ausführungsbeispiel gemäß Fig. 5. Dabei sind zur besseren Veranschaulichung der Verlauf der Steuersignale ST1, ST2 aus den Fig. 12 und 13 ebenfalls dargestellt, um die Zeitpunkte für die jeweiligen Zeitintervalle zu bestimmen.

Ferner sind in den Fig. 18 bis 21 der Verlauf des Ausgangsstroms IA, der Verlauf des Ausgangskondensatorstroms iCA, der Verlauf eines Diodenstroms iD der Diode D, umfassend mindestens eine von der Positivdiode Dp und Negativdiode Dn, der Verlauf des Ausgangsspulenstroms iLA, der Verlauf der Ausgangsspulenspannung uLA, der Verlauf des Strangkondensatorstroms iC, der Verlauf der Strangkondensatorspannung uC, der Verlauf des Spulenstroms iLL1, der Verlauf der Spulenströme iLL2, iLL3, der Verlauf der Spulenspannung uLL1, der Verlauf der Spulenspannungen uLL2, uLL3, der Verlauf der Kondensatorspannung uCS und der Verlauf des Kondensatorstroms iCS über die Zeit t dargestellt.

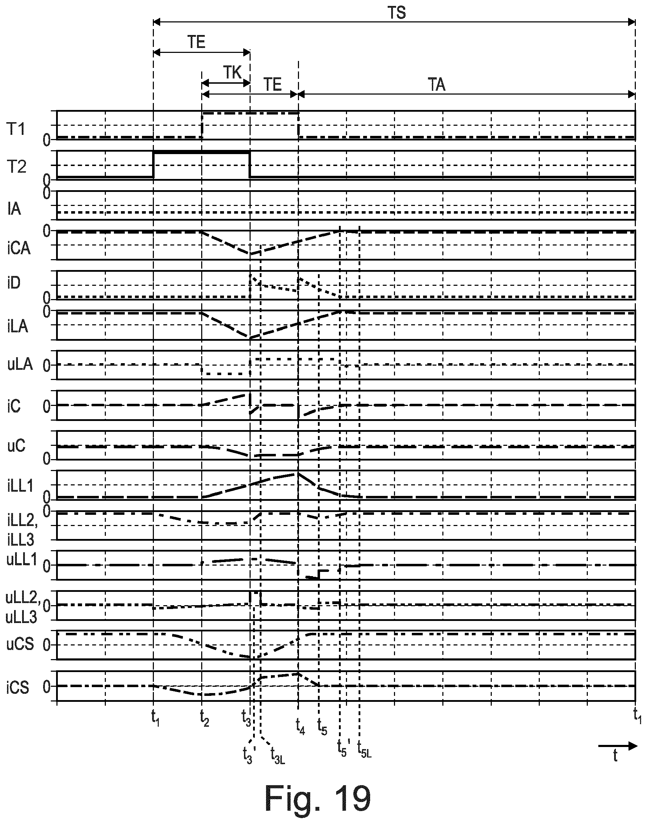

Fig. 18 und 19 zeigen unterschiedliche Kennlinien, welche sich bei der Netzschaltung 100 nach dem zweiten Ausführungsbeispiel durch die positive Ansteuerung und die negative Ansteuerung für das Hochsetzen ergeben. Die Verläufe sämtlicher Kennlinien bis auf jene des Ausgangsstroms IA und des Ausgangskondensatorstroms iCA sind identisch mit den Verläufen der Kennlinien der Netzschaltung 100 nach dem ersten Ausführungsbeispiel gemäß den Fig. 14 und 15 und werden daher der Kürze halber nicht noch einmal wiederholt.

Der Verlauf des Ausgangsstroms IA bleibt über die gesamte Periodendauer TS konstant kleiner null Ampere.

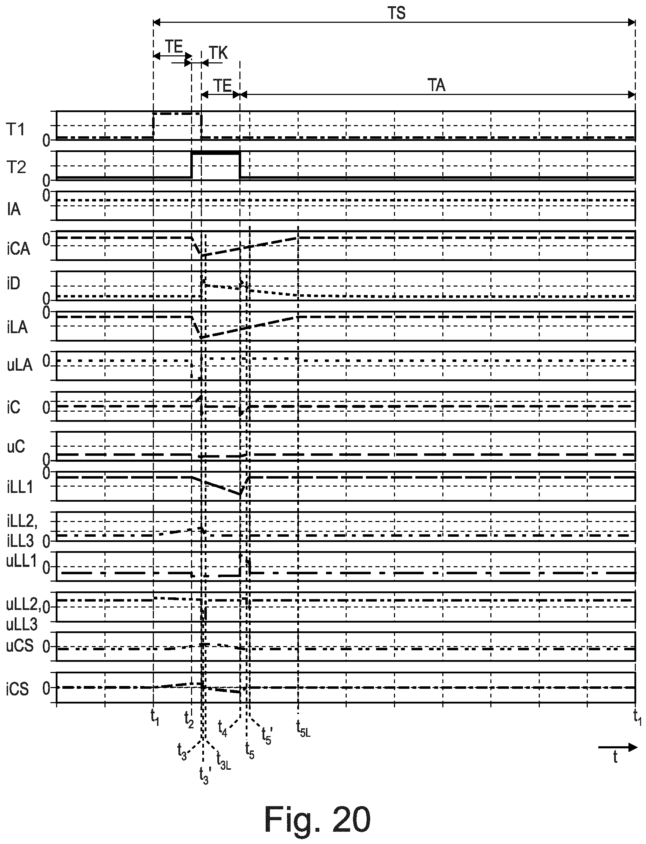

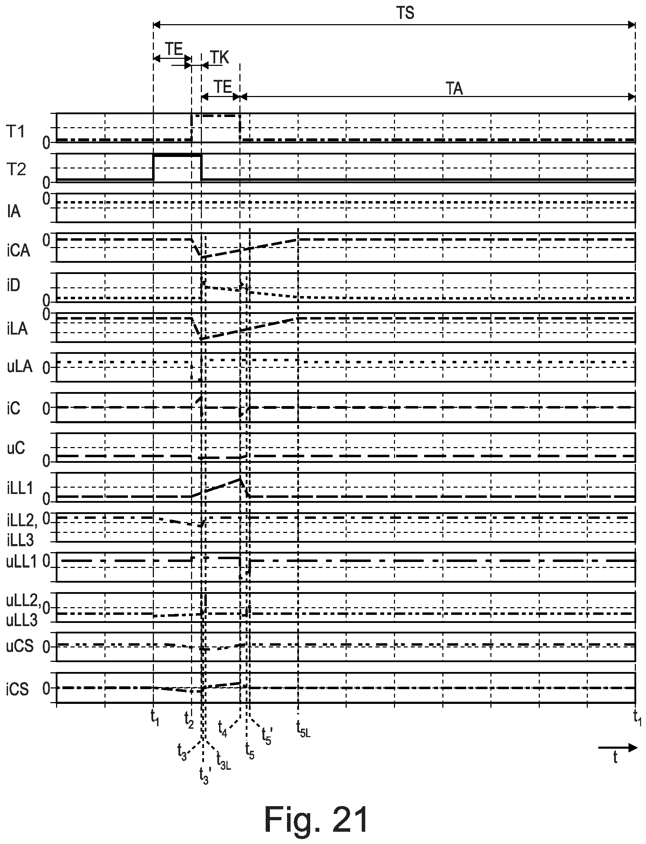

Fig. 20 und 21 zeigen unterschiedliche Kennlinien, welche sich bei der Netzschaltung 100 nach dem zweiten Ausführungsbeispiel durch die positive Ansteuerung und die negative Ansteuerung für das Tiefsetzen ergeben. Die Verläufe sämtlicher Kennlinien bis auf jene des Ausgangsstroms IA und des Ausgangskondensatorstroms iCA sind identisch mit den Verläufen der Kennlinien der Netzschaltung 100 nach dem ersten Ausführungsbeispiel gemäß den Fig. 16 und 17 und werden daher der Kürze halber nicht noch einmal wiederholt.

Fig. 22A und 22B stellen das Verfahren der positiven Ansteuerung (Fig. 22A) und das Verfahren der negativen Ansteuerung (Fig. 22B) des ersten Transistors T1 und des zweiten Transistors T2 der Netzschaltung 100 dar. Diese Verfahren beruhen auf der oben beschriebenen Ansteuerung beziehungsweise Taktung und gelten dementsprechend für das Hochsetzen und Tiefsetzen beziehungsweise für die Netzschaltung 100 nach dem ersten Ausführungsbeispiel (nicht invertierend) und für die Netzschaltung 100 nach dem ersten Ausführungsbeispiel (invertierend) in analoger weise.

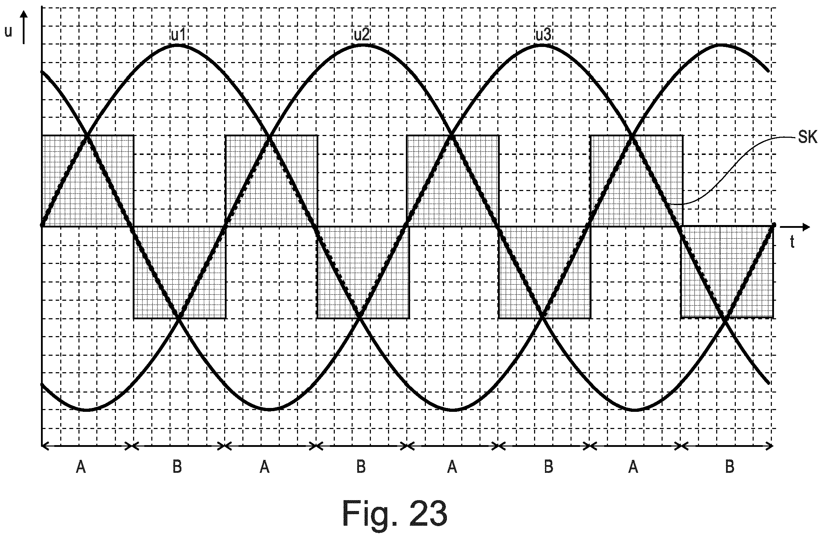

Fig. 23 stellt ein Versorgungsnetz VN als Dreiphasensystem mit den Strangspannungen u1, u2, u3 und Zeitintervallen A, B dar. Damit die Netzschaltung 100 wie gewünscht das Hochsetzen und Tiefsetzen mit Einhaltung der PFC-Normen erfüllen kann, muss die Polarität der Kondensatorladung und der Kondensatorspannung uCS des Kondensators CS berücksichtigt werden.

Betrachtet man den Verlauf der Strangspannungen u1, u2, u3 des Dreiphasensystems, gibt es positive Zeitintervalle A, bei denen zwei Strangspannungen größer null sind, und eine Strangspannung kleiner null ist und negative Zeitintervalle B, bei denen eine Strangspannung größer null ist und zwei Strangspannungen kleiner null sind. Sind zwei der Strangspannungen u1, u2, u3 größer null, so wird in diesem positiven Zeitintervall A die positive Ansteuerung (vgl. Fig. 12) angewendet. Sind zwei der Strangspannungen u1, u2, u3 kleiner null, so wird in diesem negativen Zeitintervall B die negative Ansteuerung (vgl. Fig. 13) angewendet. Über die Zeit ergibt sich eine näherungsweise dreieckförmige Spannungskurve SK (strichlierte Linie) aus Sinusabschnitten, welche durch die Zeitintervalle A, B definiert wird und um die Nulllinie herum verläuft.

Für die Zeitintervalle A, B, also jener Zeit, bei welcher die positive Ansteuerung oder die negative Ansteuerung aktiv ist, befinden sich die Strangspannungen u1, u2, u3 immer im gleichen Zustand, also größer null oder kleiner null. Für die Zeitintervalle A, B kann folglich aufgrund des symmetrischen Dreiphasensystems definiert werden, dass Zeitintervall A = Zeitintervall B ist.

Bei jeder Nullstelle der näherungsweise dreieckförmigen Spannungskurve SK erfolgt ein Wechsel von der positiven Ansteuerung auf die negative Ansteuerung bzw. von der negativen Ansteuerung auf die positive Ansteuerung. Läuft die näherungsweise dreieckförmige Spannungskurve SK von dem negativen Zeitintervall B, also mit einem Wert kleiner null, in den positiven Zeitintervall A, also mit einem Wert größer null, wechselt die Ansteuerung von einer negativen Ansteuerung auf eine positive Ansteuerung. Der Übergang von der positiven/negativen Ansteuerung in die negative/positive Ansteuerung kann zum Beispiel, wie in Fig. 22 gezeigt, schlagartig erfolgen. Der Übergang kann aber auch fließend (nicht dargestellt) erfolgen.

Die Dauer der Zeitintervalle A, B ist von der Netzfrequenz fN abhängig. Beim europäischen Versorgungsnetz mit einer Netzfrequenz von fN = 50 Hz tritt beim Dreiphasensystem alle 3,33 Millisekunden eine Nullstelle auf. Somit wird alle 3,33 Millisekunden zwischen positiver und negativer Ansteuerung gewechselt. Die Netzschaltung 100 ist aber nicht auf das europäische Versorgungsnetz begrenzt. Vielmehr kann die Netzschaltung 100 für alle internationalen Netzspannungen und Netzfrequenzen in Betrieb genommen werden.

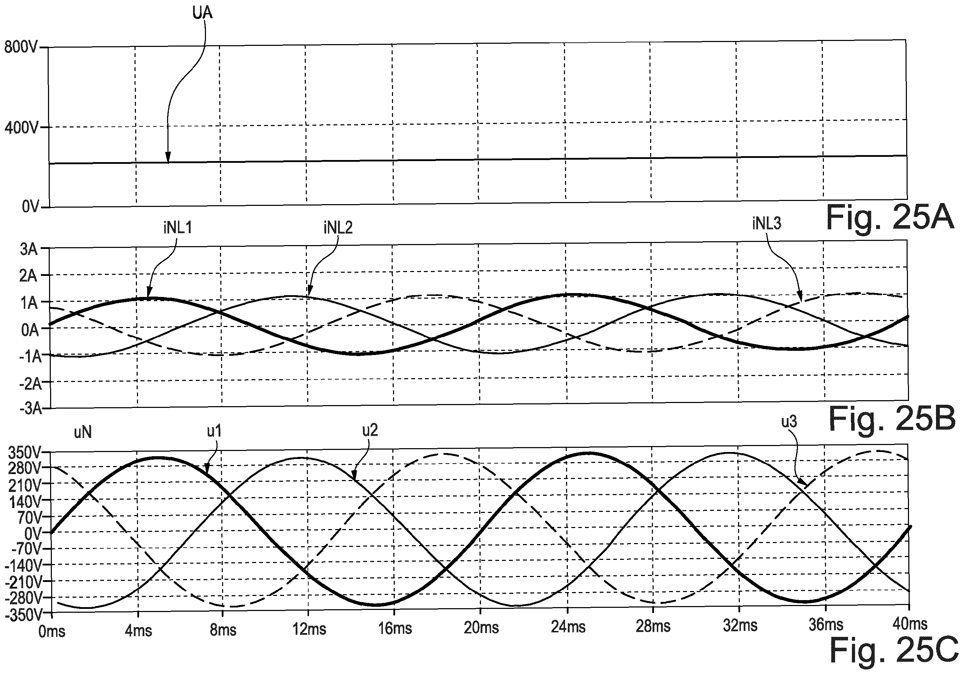

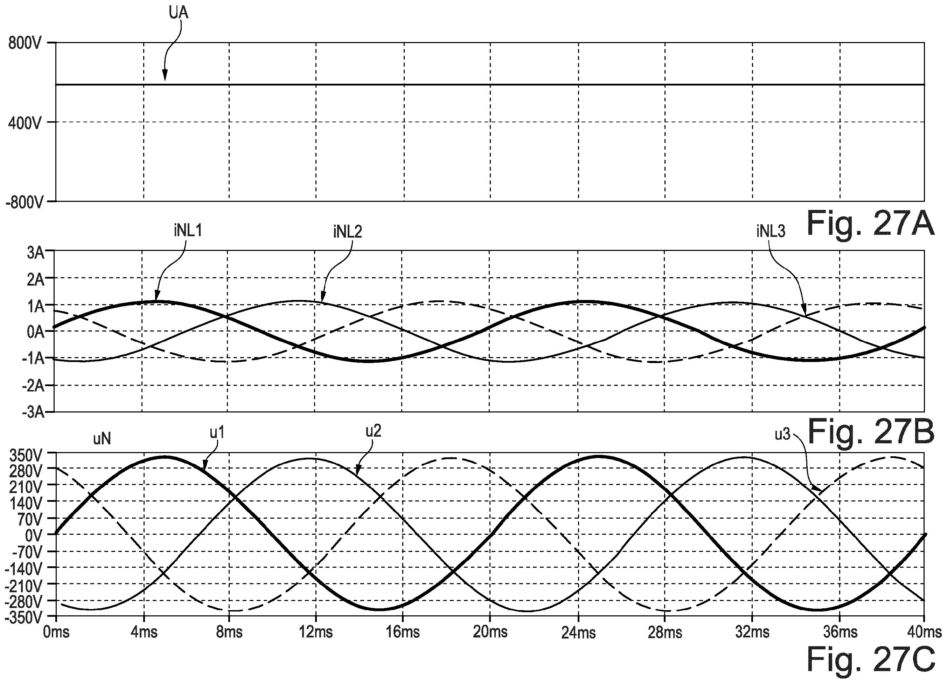

Durch das Laden der Kondensatorspannung uCS kann an den Kondensator CS in Abhängigkeit vom Ansteuern des ersten und zweiten Schalttransistors T1, T2 durch die Steuereinheit SE, eine Spannungsdifferenz zwischen den Strangspannungen u1, u2, u3 und der Kondensatorspannung uCS an den Speicherdrosseln LL1, LL2, LL3 derart beeinflusst werden, dass an den Speicherdrosseln LL1, LL2, LL3 größere Spulenspannungen uLL1, uLL2, uLL3 anliegen, als vom Versorgungsnetz VN physikalisch erhalten werden können. Mit anderen Worten, die Phasenströme iNL1, iNL2, iNL3 werden durch die Spulenspannungen uLL1, uLL2, uLL3, welche durch die an dem Kondensator CS anliegende einstellbare Spannung beeinflusst werden, moduliert. Wie in den Fig. 25B und 27B dargestellt, ergeben sich dadurch sinusförmige Netzströme iNL1, iNL2, iNL3, welche am Eingang des Gleichrichters GR bereitgestellt werden, um die Grenzwerte der PFC-Normen in den entsprechenden Leistungsklassen zu erfüllen.

Für alle beschriebenen Ausführungsbeispiele gilt, dass das Ansteuern des ersten Transistors T1 und des zweiten Transistors T2 derart erfolgt, dass die Ausgangsgleichspannung UA lastabhängig auf einen gewünschten Wert geregelt wird, wobei als Freiheitsgrade mindestens eine von der Einschaltdauer TE, der Kurzschlussdauer TK und der Ausschaltdauer TA des ersten und zweiten Transistors T1, T2 dient. Dadurch werden durch das Ansteuern neben dem Tiefsetzen bzw. Hochsetzen der Ausgangsgleichspannung UA auch die Grenzwerte für Oberschwingungsströme der PFC-Normen eingehalten beziehungsweise erfüllt, wodurch der Wirkungsgrad und die Energieeffizienz erhöht und die Anzahl an Bauteilen und somit die Kosten reduziert werden.

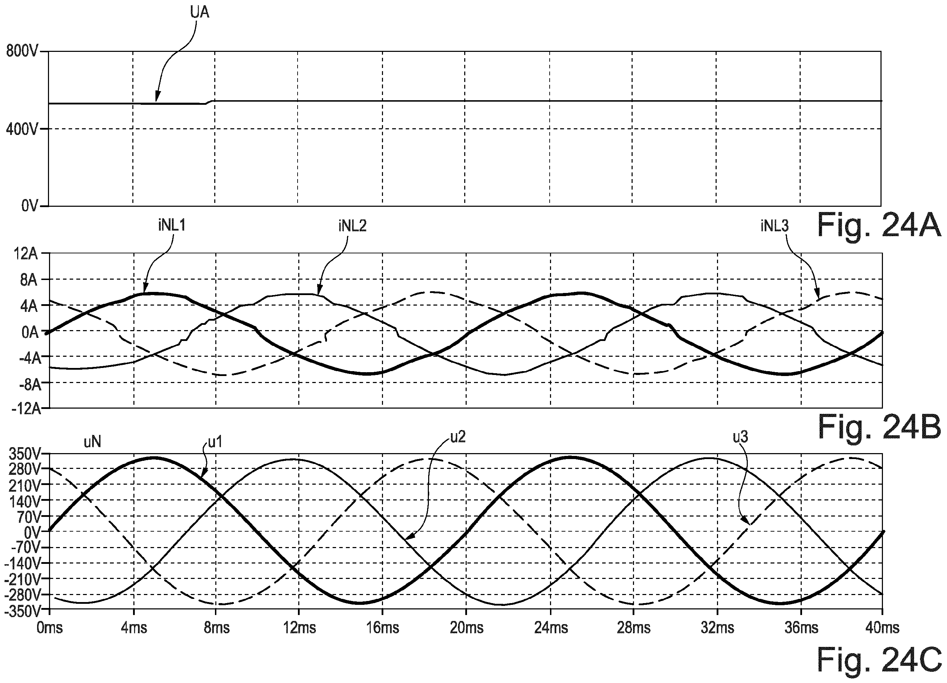

Fig. 24A, 24B und 24C stellen ermittelte Verläufe der Netzgrößen der Netzschaltung 100 nach dem ersten Ausführungsbeispiel beim Hochsetzen dar. Dabei zeigt Fig. 24A den Verlauf der Ausgangsgleichspannung UA, Fig. 24B den Verlauf der sinusförmigen Phasenströme iNL1, iNL2, iNL3, und Fig. 24C den Verlauf der Netzwechselspannung uN umfassend die Strangspannungen u1, u2, u3. Es erfolgt ein Hochsetzen auf eine positive Ausgangsgleichspannung UA bei sinusförmigem PFC-konformem Stromentzug.

Fig. 25A, 25B und 25C stellen ermittelte Verläufe der Netzgrößen der Netzschaltung 100 nach dem ersten Ausführungsbeispiel beim Tiefsetzen dar. Dabei zeigt Fig. 25A den Verlauf der Ausgangsgleichspannung UA, Fig. 25B den Verlauf der sinusförmigen Phasenströme iNL1, iNL2, iNL3, und Fig. 25C den Verlauf der Netzwechselspannung uN umfassend die Strangspannungen u1, u2, u3. Es erfolgt ein Tiefsetzen auf eine positive Ausgangsgleichspannung UA bei sinusförmigem PFC-konformem Stromentzug.

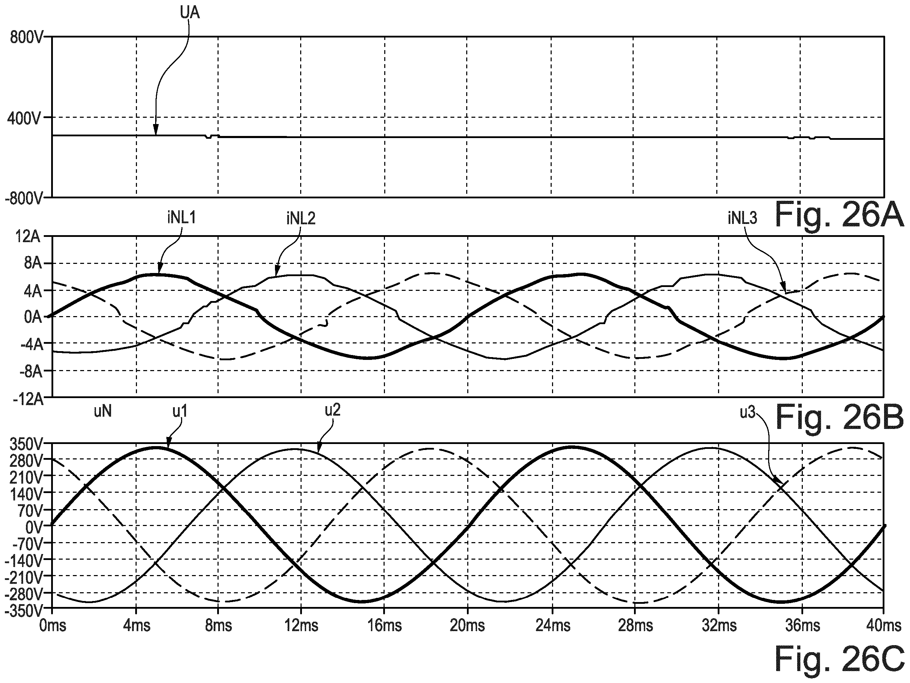

Fig. 26A bis 27C stellen ermittelte Netzgrößen der Netzschaltung 100 nach dem zweiten Ausführungsbeispiel für das Hochsetzen und Tiefsetzen in analoger Weise zu den Verläufen der Netzgrößen entsprechend Fig. 24A bis 25C dar. Fig. 26A zeigt ein Hochsetzen auf eine negative Ausgangsgleichspannung UA bei sinusförmigem PFC-konformem Stromentzug. Fig. 27A zeigt ein Tiefsetzen auf eine positive Ausgangsgleichspannung UA bei sinusförmigem PFC-konformem Stromentzug.

### Bezugszeichenliste

- 100: Netzschaltung
- A, B: Zeitintervall
- AE: Ausgangserfassung
- AN: Steuereingang
- C: Strangkondensator
- CA: Ausgangskondensator
- CS: Kondensator
- CYI,1, CYI,2, CYL3: Sternkondensatoren
- D: Diode
- D1-D6: Gleichrichterdioden
- Dn: Negativdiode
- Dp: Positivdiode
- e1, e2, e3: Eingänge
- EMI: Elektromagnetfilter (Filter gegen elektrom. Interferenzen)
- fN: Netzfrequenz
- GR: Gleichrichter
- IA: Ausgangsstrom
- iC: Strangkondensatorstrom
- iCS: Kondensatorstrom
- iNL1, iNL2, iNL3: Phasenströme
- KS: Koppelschaltung
- KS: Koppelschaltung
- L1, L2, L3: Phasen
- LL1, LL2, LL3: Speicherdrosseln
- M: Mittelpunkt
- NE: Netzerfassung
- SE: Steuereinheit
- SK: Spannungskurve
- SP: Sternpunkt
- T1: erster Transistor
- T2: zweiter Transistor
- TE: Einschaltdauer
- TK: Kurzschlussdauer
- TS: Periodendauer
- u1, u2, u3: Strangspannungen
- UA: Ausgangsgleichspannung
- uCS: Kondensatorspannung
- VN: Versorgungsnetz

## Patentansprüche

1. PFC-Netzschaltung (100) mit Halbbrücke zur Wandlung einer Netzwechselspannung (uN) in sowohl eine niedrigere als auch eine höhere Ausgangsgleichspannung (UA) unter Einhaltung von PFC-Normen, die Netzschaltung (100) umfassend:
drei Phasen (L1, L2, L3);
einen Gleichrichter (GR), umfassend drei Eingänge (e1, e2, e3);
einen ersten und einen zweiten Transistor (T1, T2), angesteuert von einer Steuereinheit (SE);
einen Mittelpunkt (M), eingerichtet zwischen dem ersten und dem zweiten Transistor (T1, T2);
einen Sternpunkt (SP), umfassend drei Sternkondensatoren (CYL1, CYI,2, CYL3);
einen Kondensator (CS), verbunden mit dem Mittelpunkt (M) und einem Bezugspotential, welches entweder das Nullpotential (N) der Netzschaltung (100) oder der Sternpunk (SP) der Sternkondensatoren sein kann;
einen Ausgangskondensator (CA), eine Ausgangsspule (LA), eine Diode (D) und einen Strangkondensator (C), wobei der Ausgangskondensator (CA) die Ausgangsspule (LA), die Diode (D) und der Strangkondensator (C) an einem Ausgangsbereich (B2) der Netzschaltung (100) bereitgestellt sind; und
drei Speicherdrosseln (LL1, LL2, LL3), jeweils verbunden mit einer von drei Phasen (L1, L2, L3) und einem der drei Eingänge (e1, e2, e3) des Gleichrichters (GR);
wobei der Kondensator (CS) ausgestaltet ist, um durch ein gezieltes Laden und Entladen über das Ansteuern des ersten und zweiten Transistors (T1, T2) als einstellbare Spannungsquelle zu dienen und eine Spannungsdifferenz an den drei Speicherdrosseln (LL1, LL2, LL3) einzustellen, um PFC-Normen zu erfüllen; und
wobei die Steuereinheit (SE) so eingerichtet ist, um den ersten Transistor (T1) und den zweiten Transistor (T2) so anzusteuern, dass eine Netzwechselspannung (uN) in eine hochgesetzte oder tiefgesetzte Ausgangsgleichspannung (UA) in Abhängigkeit einer Polarität von Strangspannungen (u1, u2, u3) gewandelt wird; und
wobei das Ansteuern des ersten und zweiten Transistors (T1, T2) durch die Steuereinheit (SE) mittels positiver und negativer Ansteuerung erfolgt.

2. PFC-Netzschaltung (100) nach Anspruch 1, bei welcher
die Diode (D) mindestens eine von einer Positivdiode (Dp) im positiven Zweig (pZ), einer Negativdiode (Dn) im negativen Zweig (nZ) oder die Positivdiode (Dp) im positiven Strang und die Negativdiode (Dn) umfasst.

3. PFC-Netzschaltung (100) nach Anspruch 1 oder 2, bei welcher
der Strangkondensator (C) mindestens einen von einem Positivstrangkondensator (Cp) im positiven Strang, einen Negativstrangkondensator (Cn) im negativen Strang oder den Positivstrangkondensator (Cp) im positiven Strang und den Negativstrangkondensator (Cn) im negativen Strang umfasst.

4. PFC-Netzschaltung (100) nach einem der vorhergehenden Ansprüche, bei welcher
die Ausgangsspule (LA) mindestens eine von einer Positivausgangsspule (LAp) im positiven Zweig (pZ), einer Negativausgangsspule (Lan) im negativen Strang oder die Positivausgangsspule (LAp) im positiven Strang und die Negativausgangsspule (Lan) umfasst.

5. PFC-Netzschaltung (100) nach Anspruch 4, ferner umfassend
eine Positiventkoppeldiode (EDp), bereitgestellt an dem Ausgangsbereich (B2) der Netzschaltung (100) im positiven Zweig (pZ) und eine Negativentkoppeldiode (EDn), bereitgestellt an dem Ausgangsbereich (B2) der Netzschaltung (100) im negativen Zweig (nZ).

6. PFC-Netzschaltung (100) nach einem der vorhergehenden Ansprüche, bei welcher die Netzschaltung (100) mehrkanalig ausgeführt ist.

7. PFC-Netzschaltung (100) nach Anspruch 6, bei welcher
die Kanäle der mehrkanalige Netzschaltung (100) synchron oder nach dem Interleave-Prinzip versetzt betrieben werden.

8. Verfahren zur Wandlung einer Netzwechselspannung (uN) in sowohl eine niedrigere als auch eine höhere Ausgangsgleichspannung (UA) unter Einhaltung von PFC-Normen an einer Netzschaltung (100), das Verfahren umfassend:
- Ansteuern eines ersten und eines zweiten Transistors (T1, T2);
- Laden und Entladen eines Kondensators (CS) in Abhängigkeit des Ansteuerns;
- Erzeugen einer Kondensatorspannung (uCS) im Kondensator (CS);
- Beeinflussen einer Spannungsdifferenz an drei Speicherdrosseln (LL1, LL2, LL3) durch die Kondensatorspannung (uCS) des Kondensators (CS); und
- Entziehen von sinusförmigen Phasenströmen (iNL1, iNL2, iNL3) aus einem Versorgungsnetz (VN), wobei Grenzwerte für Oberschwingungsströme der PFC-Norm eingehalten werden;
wobei das Ansteuern ein positives und ein negatives Ansteuern umfasst und eine Polarität von Strangspannungen (u1, u2, u3) berücksichtigt;
wobei durch das Laden und Entladen Spulenspannungen (uLL1, uLL2, uLL3) der Speicherdrosseln (LL1, LL2, LL3) den Spannungsdifferenzen zwischen der Kondensatorspannung (uCS) und der jeweiligen Netzwechselspannung (uN; u1, u2, u3) entsprechen; und
wobei die Ausgangsgleichspannung (UA) zur Netzwechselspannung (uN) in Abhängigkeit von dem Ansteuern hochgesetzt oder tiefgesetzt ist/wird.

9. Verfahren nach Anspruch 8, bei welchem
das Ansteuern des ersten Transistors (T1) und zweiten Transistors (T2) derart erfolgt, dass die Ausgangsgleichspannung (UA) lastabhängig auf einen gewünschten Wert geregelt wird, wobei als Freiheitsgrade mindestens eine von einer Einschaltdauer (TE), einer Kurzschlussdauer (TK) und einer Ausschaltdauer (TA) des ersten und zweiten Transistors (T1, T2) dient.

10. Verfahren nach Anspruch 8 oder 9, bei welchem
das Ansteuern derart erfolgt, dass Grenzwerte für Oberschwingungsströme der PFC-Normen eingehalten werden.
